# EUROPÄISCHE PATENTSCHRIFT

(11) **EP 3 968 149 B1**
(45) Veröffentlichungstag und Bekanntmachung des Hinweises auf die Patenterteilung: **24.12.2025**
(21) Anmeldenummer: 20195834.5
(22) Anmeldetag: 11.09.2020
(51) Int. Cl.: G06F 8/41, G06F 40/30

(54) **ERZEUGUNG VON STEUERUNGSVORSCHRIFTEN AUS SCHEMATISIERTEN REGELWERKEN**
GENERATION OF CONTROL RULES FROM SCHEMATIC CONTROL SYSTEMS
GÉNÉRATION DES RÈGLES DE COMMANDE À PARTIR D'UN RÉGULATEUR SCHÉMATISÉ

(43) Veröffentlichungstag der Anmeldung: 16.03.2022
(73) Patentinhaber: SemaLogic UG, 99425 Weimar (DE)
(72) Erfinder: von der Heyde, Markus, 99425 Weimar (DE); Goebel, Matthias, 59425 Unna (DE)
(74) Vertreter: Valvoda, Jakob

(56) Entgegenhaltungen:
- US-A1- 2008 126 080

## Beschreibung

Die vorliegende Erfindung betrifft Verfahren, Vorrichtungen und Systeme zur Erzeugung von Steuerungsvorschriften. Die Steuerungsvorschriften können aus einer textuellen Formulierung eines Regelwerks vollautomatisch erzeugbar sein und eine Plattform in einen im Regelwerk definierten Zielzustand versetzen.

Die Arbeits- oder Funktionsweise von Plattformen, also beispielsweise von einzelnen Vorrichtungen, Maschinen, Geräten, netzbasierten Systemen oder von steuer- und/oder regelbaren Systemen, wird typischerweise über Regelwerke spezifiziert, welche oft in schematisierten Regeltexten zusammengefasst sind. Diese werden bereitgestellt, damit die Arbeits- und Funktionsweise der Plattform dokumentiert wird und ein größerer Personenkreis die Arbeits- und Funktionsweise nachvollziehen kann. Zur Ansteuerung der Plattform, insbesondere bei Anpassungen oder Neukonfigurationen müssen jedoch oft die Regeltexte von einem Techniker gelesen, interpretiert und in Steuer- und/oder Regelprogramme umgesetzt werden, welche dann zur Ansteuerung der Plattform herangezogen werden. Diese Prozesse sind fehleranfällig, sodass typischerweise aufwändige Qualitätssicherungsmaßnahmen getroffen werden müssen.

Ferner können insbesondere bei technisch anspruchsvollen Plattformen bereits bei der Formulierung von Regeltexten Unvollständigkeiten und Inkonsistenzen auftreten, welche in dem Regeltext nur schwer identifizierbar und nachprüfbar sein können. Hierdurch können die Plattformen auch bei einer korrekten Umsetzung der Regeltexte in Steuer- und/oder Regelprogramme derart programmiert werden, dass sie in Zustände versetzt werden, welche undefiniert, fehlerhaft oder inkonsistent sind, was zu einer Fehlfunktion und im ungünstigsten Fall zu einer Gefährdung der Umgebung der Plattform führen kann.

US 2008/126080 A1 offenbart einen Ansatz zum Umwandeln von Klartext in strukturierte Daten. Parse-Bäume für den Klartext werden basierend auf einer Grammatik einer natürlichen Sprache generiert. Die Parse-Bäume werden auf Instanzbäume abgebildet, die basierend auf einem anwendungsspezifischen Modell generiert werden. Der beste Instanzbaum wird zur Ausführung an eine Anwendung übergeben.

Es ist somit eine Aufgabe der vorliegenden Erfindung, ein Verfahren und eine Vorrichtung anzugeben, welche schematisierte Regelwerke oder Regeltexte automatisch in Steuerungsvorschriften zur Ansteuerung von Plattformen umsetzt. Ferner besteht eine Aufgabe der vorliegenden Erfindung darin, eine Überprüfbarkeit von derart umgesetzten Regelwerken oder Regeltexten im Hinblick auf einen geregelten Betrieb der Plattform zu ermöglichen.

Die vorgenannte Aufgabe wird durch ein Verfahren zur Erzeugung von Steuerungsvorschriften, eine Vorrichtung zur Erzeugung von Steuerungsvorschriften und ein System mit den Merkmalen des Hauptanspruchs bzw. der weiteren unabhängigen Ansprüche gelöst. Vorteilhafte Ausgestaltungen der Erfindung sind in den abhängigen Ansprüchen definiert. Erfindungsgemäß ist ein Verfahren zur Erzeugung von Steuerungsvorschriften mit den Merkmalen des Hauptanspruchs angegeben.

Das Verfahren ist ein computerimplementiertes Verfahren oder ein Verfahren, welches auf einem Computer, einer Vorrichtung oder einer Rechenvorrichtung ausführbar ist, welche zumindest einen Prozessor oder eine Verarbeitungseinheit aufweisen kann, welche Befehle gemäß Verfahrensschritten von Ausführungsformen der vorliegenden Erfindung ausführt.

Die mindestens eine Angabe kann eine Angabe sein, welche schematisiert, jedoch in Form eines Textes sein kann. Dieser kann vorzugsweise eine lesbare Form in einer natürlichen Sprache aufweisen, welche somit von Menschen einfach gelesen und verstanden werden kann. Entsprechend kann das Dokument und/oder die mindestens eine Angabe einen schematisierten Regeltext aufweisen, der das Regelwerk formuliert.

Die mindestens eine Angabe kann auf Basis einer formalen Sprache gegliedert werden, um die Vielzahl von syntaktischen Blöcken zu generieren, welche wiederum zur Konstruktion der Terme und Symbole verwendet werden. Entsprechend kann das Konstruieren auf Basis der formalen Sprache erfolgen.

Die semantische Repräsentation entspricht einer logisch-semantischen Gesamtrepräsentation, welche sowohl die Semantik des Regelwerks, als auch seine logischen Zusammenhänge eindeutig darstellt. Entsprechend umfasst die vorliegende Erfindung eine Transformation von schematisierten Regeltexten auf Basis einer formalen Sprache in eine eindeutige logisch-semantische Gesamtrepräsentation.

Die semantische Repräsentation des Regelwerks kann auf Konsistenz und Erfüllbarkeit geprüft werden. Alternativ oder zusätzlich kann das Prüfen weitere semantisch-logische und/oder temporäre und/oder strukturelle Eigenschaften aufweisen. Das Prüfen kann eine Grundlage für das nachfolgende Erzeugen der mindestens einen Steuerungsvorschrift sein.

Entsprechend kann diese nur dann erzeugt werden, wenn das Prüfen zu einem positiven oder zulässigen Ergebnis führte.

Hiermit kann vorteilhaft aus einer lesbaren, jedoch strukturierten Angabe eines Regelwerks vollautomatisch eine überprüfbare Gesamtrepräsentation erzeugt werden, sodass sichergestellt werden kann, dass die nachfolgend erzeugten Steuerungsvorschriften eine fehlerfreie, konsistente und intendierte Steuerung einer durch das Regelwerk spezifizierten Zielplattform erfolgt. Vorzugsweise ist die Zielplattform ein technisches System, ein mechanisches System (IoT), ein Cloud-System, ein Client-System ein SaaS-System eine Web-Schnittstelle und dergleichen und/oder auf der Zielplattform ausgeführte Steuer- und/oder Regelprogramme.

Im Rahmen der Beschreibung können die folgenden Begriffe wie folgt definiert sein.

Mathematische Terme bzw. Ausdrücke formulieren mithilfe von mathematischen Operatoren (z.B. den Grundrechenarten Addition, Subtraktion, Multiplikation, Division) Zusammenhänge in einer kompakten formelbasierten Schreibweise. So kann die Relation "Bruttopreis = Nettopreis * Mehrwertsteuersatz" kompakt ausgedrückt werden und von vielen Menschen in der gleichen Weise verstanden werden. Die sprachliche Umsetzung "Der Bruttopreis entspricht dem Produkt aus Nettopreis und Mehrwertsteuersatz" sollte dabei die identische Bedeutung haben, wenn "entspricht" mit dem "=" als identisch angesehen wird und die Formulierung "Produkt aus A und B" der Formel "A * B" auf der semantischen Ebene entspricht.

In der Logik werden logische Aussagen, die keine Axiome sind (also nicht zur Definition der Mathematik selbst vorausgesetzt werden), als "wahr" oder "falsch" angesehen, wenn diese sich aus den Axiomen durch äquivalente Umformung ableiten lassen. Die Verknüpfung von logischen Aussagen wird dabei durch die Grundoperationen "Und" sowie "Oder" hergestellt. Ebenso kann das "Nicht" als Umkehrung einer logischen Aussage als eine solche Grundoperation angesehen werden.

In der symbolische Logik werden sechs logischen Beziehungen (logical connectives) von Aussagen formuliert. Entsprechend kann die symbolische Logik einer "normalen" Logik überlegen sein.

Wenn mehrere logische Aussagen über die gleichen Variablen (oder allgemeiner über einen "Gegenstand") getroffen werden, so können die logischen Aussagen im Einklang sein oder Widersprüche enthalten. Der Widerspruch drückt sich im Allgemeinen dadurch aus, dass zwei logische Aussagen zum gleichen Gegenstand nicht gleichzeitig wahr und falsch sein können. Die Beweisbarkeit von logischen Aussagen kann Grenzen haben.

Als natürliche Sprache werden Texte bezeichnet, die durch Menschen, welche diese Sprache beherrschen, einem intuitiven Sprachverständnis unterliegen. Oft können identische Inhalte mit verschiedenen Formulierungen wiedergegeben werden; andererseits können Formulierungen gerade nicht eindeutig sein. Demgegenüber sind formale Sprachen so angelegt, dass Aussagen eindeutig sind. Mathematik und Computersprachen sind Beispiele für formale Sprachen, die darauf abzielen, Mehrdeutigkeit von Aussagen zu vermeiden.

In einer Textanalyse werden aus einem vorhandenen Text verschiedene Merkmale extrahiert. Diese können auf der formalen Seite rein statistische Aussagen (bspw. Anzahl der Buchstaben) sein. Andererseits ist Extraktion der kodierten Intention, d.h. die semantische Bedeutung, ebenfalls eine Form der Textanalyse. Die Verarbeitung eines natürlichsprachlichen Textes durch einen Computer mit dem Ziel der Textanalyse kann als Natural Language Processing (NLP) bezeichnet werden.

Eine Aussage kann einem spezifischen Textabschnitt entstammen, der während der Analyse verwendet wurde. Um eine komplette Nachvollziehbarkeit, z.B. für eine Fehleranalysen, zu erlauben, kann vorzugsweise eine gesamte Kette von einer Quelle im Text, bspw. einer der mindestens einen Aussage, bis zu einer abgeleiteten Aussage, bspw. einem Term der semantischen Repräsentation, erzeugt werden.

Eine Bedeutung oder Intention, die ein Text enthält, wird mit dem Begriff Semantik bezeichnet. Eine abstrakte datentechnische Repräsentation dieser Textbedeutung zielt darauf ab, eine äquivalente, also gleichbedeutende Form des Inhalts dem Computer zur weiteren Verarbeitung zugänglich zu machen. Diese wird vorzugsweise durch die semantische Repräsentation dargestellt.

Einzelne Begriffe und Aussagen bekommen oftmals nur in einem Kontext eine konkrete und eindeutige Bedeutung. Alle Regeln, an die sich die Formulierung von diesen Beziehungen zu halten hat, werden als Grammatik bezeichnet. Zur Abgrenzung von mehreren Satzbestandteilen und der Festlegungen der zulässigen Reihenfolge im Satzgefüge dient dabei die Syntax.

Variationen von natürlicher Sprache (z.B. über geographische Gebiete hinweg) werden als Dialektik bezeichnet. Mehrere Dialekte können sich mischen oder stärker voneinander abgrenzen. Vorzugsweise können alternative Sprachdefinitionen, die sich durch den Austausch von Satzzeichen, Symbolen sowie der Syntax ergeben, als Dialekte der formalen Sprache betrachtet werden.

Aktoren oder Aktuatoren können Signale zur Steuerung von Maschinen bzw. ein aktives Eingreifen in vorhandene Prozesse darstellen. Die Signale können dabei sowohl elekto-/magnetische Signale als auch eine Änderung physikalischer Größen umfassen. Ferner können Aktoren oder Aktuatoren, beispielsweise im Bereich des "Internets der Dinge" (Internet of Things, IoT) Befehlsübertragungen, beispielsweise in Form von HTTP-Anforderungen oder beliebiger protokoll-basierter Anforderungen, oder eine softwaretechnischen Auslösungen von Ereignissen, beispielsweise in Form von XML-Nachrichten oder anderweitig strukturierter Nachrichten in einem Enterprise-Service-Bus oder einer Micro-Service-Architektur, ebenfalls als Aktoren oder Aktuatoren bezeichnet werden. In dieser Erfindung wird der Fokus auf die allgemeine Befehlsübertragung zur Steuerung derartiger software- oder hardwaretechnischer Zustandsänderungen gelegt.

Eine Steuerung kann eine gerichtete Beeinflussung eines Verhaltens eines technischen Systems bedeuten. Eine Regelung kann eine auf aktuellen Parametern, Eigenschaft und Charakteristiken eines technischen Systems beruhende gerichtete Beeinflussung eines Verhaltens des technischen Systems bedeuten. Entsprechend können sich Ausführungsformen der vorliegenden Erfindung bei der Erzeugung von Steuerungsvorschriften in einer Systematik einer Ablaufsteuerungen, beispielsweise einer digitalen Ablaufsteuerung, befinden, die in der Lage sein kann, entweder direkt oder auf Basis von einem oder mehreren aus u.a. Systemzuständen, -eigenschaften, -charakteristiken und/oder Sensorinformationen und dem Regelwerk Aktoren der Zielplattform oder eines technischen Systems auszulösen.

Ein Regelwerk ist dann vollständig, wenn die enthaltenen Aussagen einen Sachverhalt ohne Lücken in der Definition festlegen. Derartige Lücken können z.B. fehlende Aussagen zu Teilsystemen sein, die genannt werden, ohne dass ihnen klärende Regeln zugeordnet werden. Fehlende Aussagen können dazu führen, dass die Erfüllbarkeit des Gesamtwerks nicht verifizierbar sein kann. Die Prüfung der semantischen Repräsentation kann Aufschluss über die Vollständigkeit des Regelwerks liefern.

Ein Regelwerk ist erfüllbar, also konsistent, wenn es widerspruchsfrei ist, d.h. wenn es mindestens eine Lösung gibt, sodass alle enthaltenen Aussagen als wahr angesehen werden können. Da die Aussagen des Regelwerks Wahloptionen oder Wertebereiche formulieren oder Nebenbedingungen enthalten können, kann ein Regelwerk mehr als eine Lösung besitzen.

Widersprüche in den Aussagen können sich auf Teile (z.B. einzelne Versionen oder Teilbäume der logischen Hierarchie) des vollständigen Regelwerks beziehen. Entsprechend können Steuerungsvorschriften auch für einen oder mehrere Teile des Regelwerks erzeugt werden, welche erfüllbar sein können.

Wenn für einen Teil der Aussagen weitere Festlegungen (z.B. im Rahmen einer Instanziierung) getroffen werden, kann die Erfüllbarkeit für die übrigen Freiheitsgrade eingeschränkt sein. Es besteht keine Erfüllbarkeit, wenn es keine Kombination der verbleibenden Wahloptionen gibt, sodass alle Aussagen des Regelwerks wahr bleiben. Die Prüfung der semantischen Repräsentation kann Aufschluss über die Erfüllbarkeit des Regelwerks für eine oder mehrere Instanzen liefern.

Ausführungsformen der Erfindung können sich von einer reinen prozedurale Steuerung abgrenzen. Prozedurale und objektorientierte Computersprachen setzen Abläufe, Zusammenhänge usw. durch das Prinzip "teile und herrsche" in einzelne Ablaufschritte, um diese nacheinander und in Abhängigkeit von Wenn-Dann Entscheidungen auszuführen. Regelkreise können in dieser Weise dargestellt und in überschaubare Teile zerlegt werden. Es ist oftmals nicht möglich, solche Algorithmen in ihrer Zielerreichung und ihrer Effektivität als Gesamtregelwerk zu beweisen. Das in Ausführungsformen der Erfindung definierte Regelwerk kann eine Zielsituation beschreiben, setzt dabei aber nicht notwendigerweise eine Reihenfolge einer Programmausführung voraus, sondern kann auf rein logischer Ebene Zusammenhänge beschreiben, die optional in zeitlicher Abfolge stehen können. Eine regelbasierte Steuerung kann vollständig auf Wenn-Dann-Strukturen verzichten. Stattdessen können derartige Zusammenhänge auf einer logischen Ebene auf Erfüllbarkeit des Gesamtregelwerks zurückgeführt werden: 1) Bei Nicht-Erfüllbarkeit können die am Widerspruch beteiligten Aussagen extrahiert werden, um daraus Steuerungssignale zu generieren. Durch diese Steuerung kann das Gesamtsystem in einer Instanz (Zusammenstellung konkreter Zustände) zurück in einen zulässigen Regelbereich geführt werden. Andererseits können 2) im Rahmen der Erfüllbarkeit ggf. einzelne Wahloptionen als notwendige Konsequenz aus den Regeln folgen. Auch diese Konsequenz kann zu Steuerungsvorschriften gemäß Steuersequenzen führen. In beiden Fällen können sich somit logisch konsequente Schritte ergeben, die in einer Ausführung des gesteuerten Zielsystems gemäß den erzeugten Steuerungsvorschriften unternommen werden müssen, um einen konsistenten Zustand herzustellen bzw. logisch fortzuentwickeln.

Ausführungsformen der vorliegenden Erfindung können sich von reinen logischen Programmiersprachen abgrenzen. Logische Programmiersprachen, bspw. Lisp oder Prolog, definieren neben dem Wissen auch den Umgang mit dem Wissen in flexibler Form und mit mehreren Sprachkonstrukten. Dadurch ist die Nutzung der Sprachen dem Experten vorbehalten, der die Wirkung der logischen Untersuchung (z.B. Inferenz) in einer logischen Programmiersprache selbst formulieren muss. Ausführungsformen der vorliegenden Erfindung können vorzugsweise über symbolische Logik in zwei Punkten hinausgehen: in einer Wahl von "n bis m aus k-Optionen" bei Oder-Aussagen und/oder einer Integration zeitlicher Reihenfolgen, in beliebiger Kombination. Ausführungsformen der vorliegenden Erfindung können Inferenzen intern kapseln und die Konsequenz der ermittelten Resultate in Form der Steuerungsvorschriften bzw. offenen Optionen zur Verfügung stellen. Eine Nutzung kann insofern auf definierte Zwecke eingeschränkt sein, aber genau dadurch auf dem Gebiet einer zu steuernden Plattform oder eines Systems ohne tiefere Kenntnisse der Plattform oder des Systems direkt auf eine Steuerungsaufgabe anwendbar sein. Das erfindungsgemäße Verfahren schließt dadurch vorteilhaft die Lücke zwischen der theoretischen Ebene der logischen Programmiersprachen und der konkreten Steuerung einer technischen Anlage.

Ausführungsformen der vorliegenden Erfindung können sich von reinen Expertensystemen abgrenzen. Expertensysteme bestehen in der Regel aus zwei Komponenten: einer Wissensbasis und einer Menge von Methoden, um aus dem Wissen zusätzliche Schlüsse zu ziehen. Diese s.g. Inferenz basiert gleichzeitig auf unscharfen Schlussfolgerungen. Oftmals werden Heuristiken dort angewendet, wo eine komplette Untersuchung des Lösungsraumes zu aufwändig wäre. Es wird also eine Lösung bestimmt, die ausreichend gut ist, von der aber nicht bekannt ist, ob diese Lösung tatsächlich das Optimum darstellt. Ausführungsformen der vorliegenden Erfindung können sich abgrenzen. Ausführungsformen der vorliegenden Erfindung repräsentieren in der formalen Sprache ebenfalls Wissen. Es wird aber auf eine unscharfe (z.B. fuzzylogischen) Repräsentation verzichtet und stattdessen die konkrete Interpretation der formalen Sprache in einer logisch-semantische Regel nachvollziehbar festgelegt. Die Berechnung der Lösungen erfolgt im implementierten System vollständig und verzichtet dabei auf Heuristiken. Inferenz wird in der Erfindung nicht zur Gewinnung neuen Wissens verwendet. Schlussfolgerungen werden ausschließlich innerhalb des in der formalen Sprache definierten Regelsystems getroffen.

Ausführungsformen der vorliegenden Erfindung können sich von hybriden Steuerungssystemen abgrenzen. Ereignissteuerung wird technisch an Stellen implementiert, wo Zustände von Systemen in einem "Wenn-Dann"-Schema verarbeitet werden. Der Vorteil einer unabhängigen Reaktionsmöglichkeit auf bestimmte Zustände erlaubt eine zeitlich schnelle Reaktion, z.B. in Mensch-Maschine-Schnittstellen. Oftmals werden in solchen Systemen Einschränkungen vom Kontext über Constraints vorgenommen, um die Interaktion mit dem Nutzer zu vereinfachen und Nachfragen / Prüfungen zu reduzieren. Ausführungsformen der vorliegenden Erfindung sind kein Dialogsystem, das in unmittelbarer Interaktion mit dem Nutzer steht und natürliche geschriebene oder gesprochene Sprache ohne jede Einschränkung abbildet. Die Erfindung ist immer durch die jeweilige Definition der Abbildung von Sprachsymbolen auf der formale Sprachebene an einen konkreten Kontext gebunden. Innerhalb dieses Kontextes findet eine eindeutige Verarbeitung des Regelwerks statt, bei der Unschärfen innerhalb der Sprachsymbole formalisiert werden, aber nicht der freien Interpretation überlassen bleiben. Während oder nach der Regelwerkserstellung werden im Rahmen der mehrstufigen Prüfungsprozesse sowohl formale Fehler, logische Fehler als auch Empfehlungen zur Vereinfachung des Regelwerks ermittelt und können unter Bezug auf den vom Anwender genutzten "Dialekt" zurückgemeldet werden - sowohl per Schnittstelle als auch in der Form von Steuerbefehlen (z.B. Auslösung eines Ereignisses im Erstellungssystem: Wenn das Regelwerk in einer integrierten Entwicklungsumgebung erzeugt wird und an Ausführungsformen der vorliegenden Erfindung zur Prüfung geschickt wird, können Fehlermeldungen direkt als auch über Steuerungsbefehle zurückgegeben werden). Innerhalb der Regelanwendung für Instanzen mit Zielzuständen erzeugt eine Ausführungsform der vorliegenden Erfindung konkrete Aktionen, um regelwerkskonform das Ziel zu erreichen.

Ausführungsformen der vorliegenden Erfindung können sich von reinem maschinellen Lernen oder dem Begriff der Künstlichen Intelligenz abgrenzen. Unter künstlicher Intelligenz werden Systeme verstanden, deren komplexe Fähigkeiten den menschlichen in Teilaspekten ähnlich sind. Es ist dabei Ziel, sich der Leistungsfähigkeit des Menschen anzunähern (Steuerung autonomer Fahrzeuge) oder diese (z.B. im Go oder Schach) zu übertreffen. Diese Systeme arbeiten z.B. mit Methoden des Deep-Learning, bei dem die Zwischenrepräsentationen nicht logisch interpretierbar sind, aber offensichtlich wirkungsvoll heuristisch ein gutes Ergebnis erzielen. Ausführungsformen der vorliegenden Erfindung übertreffen in der Leistungsfähigkeit den Menschen auf der Ebene der Ableitung von logischen Konsequenzen sowie der Prüfung von komplexen Aussagen. Dennoch passiert dies "nur" auf Basis von mathematischer Aussagenlogik, die selbst nicht als Teil der Erfindung gilt. Die Erfindung muss kein System sein, das in den Bereich der künstlichen Intelligenz fällt, da alle Aussagen mathematisch eindeutig und logisch beantwortbar bleiben. Ausführungsformen der vorliegenden Erfindung reagieren auf Eingaben (Regelwerke und Instanziierung) deterministisch, nicht heuristisch oder statistisch.

Ausführungsformen der vorliegenden Erfindung können sich von reinen Controllern abgrenzen. Technische Controller implementieren einen Regelkreis in direkter Kopplung von Ein- und Ausgaben. Die Systemtheorie beschreibt eine Vielzahl verschiedener Modelle. Je nach Regler / Controller wird dabei mehr oder weniger stark den Vorgaben zeitlich gefolgt, sodass z.B. Schwingungen in einem technischen System gedämpft werden, die ansonsten durch zeitliche Latenzen zu Instabilitäten führen könnten. Modelle und Methoden z.B. aus der Kybernetik untersuchen, in welcher Weise natürliche Systeme genau einem der theoretischen Modelle entsprechen und wie diese sich technisch nachempfinden lassen könnten (Black-Box-Approach). Ausführungsformen der vorliegenden Erfindung können als implementiertes System auf Grundlage eines Regelwerks zur Steuerung einer Anlage genutzt werden. Dabei bezieht sich das Steuerungssignal aber auf die in den Regeln definierten Sollzustände und es wird erwartet, dass z.B. die Ansteuerung des Fensters dann durch einen klassischen Controller bzw. Aktuator ausgeführt wird. Die Erfindung gibt (z.B. durch HTTP-Post Befehle) nur die Vorgabe an diesen Aktuator, ein Fenster zu öffnen, ohne dass die Fensteröffnung selbst in der Ausführung kontrolliert wird. Das implementierte System leitet aus dem Regelwerk nur den logisch erforderlichen bzw. machbaren nächsten Schritt ab und gibt diesen über geeignete Steuerbefehle an ausführende Aktoren weiter.

Ausführungsformen der vorliegenden Erfindung können sich von reinen Metasprachen abgrenzen. Metasprachen beschreiben Programm-Konzeptionen in abstrakter Weise. So werden z.B. in der Unified Modeling Language (UML) die Bezüge von Objekten und Datenstrukturen sowie deren Fluss durch Transformationsstufen eines Programms beschrieben. In analoger Weise wie UML Objekte und deren Beziehungen formuliert, wird durch die in Ausführungsformen der vorliegenden Erfindung formulierte formale Sprache der semantische und logische Inhalt eines Regelwerks ausgedrückt und die dort enthaltenen Begriffe / Symbole in Ebenen gegliedert und zueinander in Beziehung gesetzt. Die Erfindung geht aber über die Definition der notwendigen formalen Sprache hinaus, indem die aus dem Regelwerk und einer Instanziierung entstehen Konsequenzen zur Regelung genutzt werden.

Ausführungsformen der vorliegenden Erfindung können sich von der reinen Sprachübersetzung abgrenzen. Sprachübersetzungen transferieren Bedeutung von Text von einer natürlichen Sprache (bspw. Deutsch) in eine andere (bspw. Englisch). Da die enthaltene Bedeutung zwar durch die Domäne des Sprechers kontextgebunden ist, aber ansonsten beliebige Worte und Ausdrücke enthalten kann, ist die vollständige Sinn-erhaltende Übersetzung von Texten eine Herausforderung für die Computerlinguistik. Ausführungsformen der vorliegenden Erfindung müssen nicht in der Lage sein, beliebig enthaltene Semantik eines Textes zu kodieren. Vielmehr werden ausschließlich die Teile eines Textes von dem System interpretiert, die einer zuvor vereinbarten Syntax entsprechen und die vorgesehenen logischen Ausdrücke der formalen Sprache enthalten. Erkannte Ausdrücke werden in die Semantische Repräsentation übertragen. Von dort kann die kodierte Intention in andere durch eine vorgegebene Syntax definierte Sprachen übertragen werden. Dabei bleibt die Bedeutung der Regeln vollständigen erhalten. Dieser Transfer ist im weitesten Sinne als Übersetzung zu bezeichnen, ist aber ausschließlich auf die in der formalen Sprache enthaltenen Konstrukte beschränkt. So wären z.B. emotionale Unterschiede von Gedichten nicht Gegenstand der formalen Sprache. Logische Regeln der Zugehörigkeit, Wahloptionen und der zeitlichen Anforderungen hingegen können in der formalen Sprache kodiert und damit in beliebige andere gleichermaßen formalisierte Sprachen übertragen werden. Voraussetzung dafür ist die geeignete Konfiguration der Statusübergänge des Syntaxparsers und der dialektischen Symbole.

Ausführungsformen der vorliegenden Erfindung können sich vom reinen Sprachverständnis abgrenzen. Die zentrale Aufgabe der Verarbeitung von natürlicher Sprache zur Erreichung eines Sprachverständnisses ist die Auflösung der in natürlicher Sprache vorkommenden syntaktischen Mehrdeutigkeiten sowie das Verständnis der semantischen Beziehungen über mehrere Sätze hinweg. Ziel ist die enthaltene Pragmatik (Absicht der sprachlichen Äußerung) zu erkennen und daraus Folgerungen bzw. Handlungen abzuleiten. Das Ziel von Ausführungsformen der vorliegenden Erfindung muss nicht in der Erzeugung eines Verständnisses der natürlichen Sprache oder rein natürlichsprachlicher Texte liegen. Ausführungsformen der vorliegenden Erfindung können die Anwendung einer Formalsprache erfordern, die durch ihre Nähe zur natürlichen Sprache von Menschen einfach verstanden wird. Ziel kann sein, logische Zusammenhänge eindeutig zu formulieren, dabei aber nicht abstrakt wie eine Programmiersprache zu wirken. Die Formalsprache wird mithilfe der konfigurierbaren Grammatik und Zeichen an den natürlichsprachlichen Kontext der Domäne des Nutzers angepasst.

In einer Ausführungsform weist die mindestens eine Angabe eine textuelle Formulierung des Regelwerks auf. Die textuelle Formulierung kann ein natürlichsprachlicher Text sein. Die textuelle Formulieren in der Angabe kann beliebig im Dokument kodiert und entsprechend im Dokument abgespeichert sein, sodass das Dokument von einer Rechenvorrichtung gelesen und als Text bereitgestellt werden kann, beispielsweise über eine Benutzeroberfläche.

Gemäß einer weiteren Ausführungsform ist die mindestens eine Steuerungsvorschrift eine zielsystemabhängige Steuerungsvorschrift. Die mindestens eine Steuerungsvorschrift kann über eine Instanz eines Zielsystems oder einer Plattform definiert sein, derart, dass bei Ausführung der mindestens einen Steuerungsvorschrift auf dem Zielsystem oder der Plattform ein gewünschter Zielzustand erreichbar sein kann.

Erfindungsgemäß umfasst das Verfahren ferner ein Umwandeln der mindestens einen Steuerungsvorschrift in eine Vielzahl von plattformspezifischen Befehlen zur Ansteuerung einer Zielplattform. Die mindestens eine Steuerungsvorschrift kann gemäß einer Abbildung in plattformspezifische Befehle umgesetzt werden. Eine Steuerungsvorschrift kann hierbei in einen oder mehrere plattformspezifischen Befehle umgesetzt werden.

In einer Ausführungsform weist die Vielzahl von plattformspezifischen Befehlen eine Vielzahl von Aktoren auf, welche die Zielplattform in einen Zielzustand versetzen. Die Aktoren können gezielt Zustände, Eigenschaften und/oder Parameter der Zielplattform beeinflussen und Eingaben in Bezug auf die Zielplattform oder Zustände, Eigenschaften und/oder Parameter der Zielplattform abfragen.

In noch einer weiteren Ausführungsform weist die Vielzahl von Aktoren einen oder mehrere aus einem Aktor zum Setzen mindestens eines Parameters der Zielplattform, einem Aktor zum Auslesen von mindestens einem Parameter eines aktuellen Systemzustands der Zielplattform und einem Aktor zum Abfragen einer Wahlmöglichkeit auf. Der Aktor zum Setzen mindestens eines Parameters der Zielplattform oder des Zielsystems kann ein Befehl sein, der beim Ausführen durch die Zielplattform oder das Zielsystem den Parameter in der Zielplattform oder im Zielsystem setzt. Dieser Aktor kann auch als ein Set-Aktor bezeichnet werden. Der Aktor zum Auslesen von mindestens einem Parameter eines aktuellen Systemzustands der Zielplattform oder des Zielsystems kann ein Befehl sein, der beim Ausführen durch die Zielplattform oder das Zielsystem einen Wert des Parameters in der Zielplattform oder im Zielsystem ausliest und zur Verfügung stelle. Dieser Aktor kann auch als ein Get-Aktor bezeichnet werden. Der Aktor zum Abfragen einer Wahlmöglichkeit für mindestens einen Parameter der Zielplattform oder des Zielsystems kann ein Befehl sein, der beim Ausführen durch die Zielplattform oder das Zielsystem oder eine beliebige Rechenvorrichtung eine Entscheidung in Bezug auf einen Parameter in der Zielplattform oder im Zielsystem abfragt. Beispielsweise kann ein Wert des Parameters in einem Bereich vorgesehen sein und der Befehl kann einen konkreten Wert abfragen (Get-Aktor). Die Vielzahl von Aktoren kann ferner einen Aktor aufweisen, mit dem das Zielsystem mit Steuerungsbefehlen versorgt werden kann. Dieser Aktor kann auch als ein State-Aktor bezeichnet werden. Sollten mehrere durch Aktoren aus der Vielzahl von Aktoren induzierte Befehle in ihrer gegenseitigen Priorität als gleichwertig, beispielsweise durch Linearisierungsvorschriften, eingeordnet werden, so kann schließlich über den Aktor zum Abfragen einer Wahlmöglichkeit eine nutzerbasierte Entscheidung einbezogen werden. Dieser Aktor kann auch als ein NeedDecision-Aktor bezeichnet werden. Vorzugsweise kann bei einer vollautomatischen Steuerung ein solcher Zustand vermieden werden, solange das Zielsystem in einem wohldefinierten Zustand gehalten werden kann.

Gemäß einer Ausführungsform weist das Umwandeln ein Einreihen der Vielzahl von plattformspezifischen Befehlen gemäß mindestens einer Linearisierungsvorschrift auf. Die Linearisierungsvorschrift kann eine Abfolge der Befehle zur Erreichung eines gewünschten Zielzustands definieren. Diese kann durch Abbildungen der Steuerungsvorschriften auf die Befehle für eine Zielplattform oder ein Zielsystem definiert sein.

Erfindungsgemäß weist das Prüfen der semantischen Repräsentation ein automatisches Prüfen des Regelwerks auf mindestens eines aus Vollständigkeit, Konsistenz und Anwendung auf einen Einzelfall auf. Die Prüfung kann zu einer Aussage führen, ob das Regelwerk vollständig oder konsistent ist. Ferner kann die Prüfung im Hinblick auf eine oder mehrere Instanzen erfolgen. Zusätzlich kann ein Zielzustand für die Zielplattform oder das Zielsystem definiert werden und ggf. durch Werte der Instanz weiter konkretisiert werden.

Erfindungsgemäß weist die semantische Repräsentation mindestens einen semantischen Baum auf, wobei der semantische Baum eine Vielzahl von Termen und Symbolen aufweist.

Vorzugsweise weist der mindestens eine semantische Baum eine Vielzahl von Elementen auf, wobei ein oder mehrere aus der Vielzahl von Elementen mindestens eine Referenz auf ein weiteres Element aus der Vielzahl von Elementen aufweist.

Der semantische Baum kann vorteilhaft Beziehungen zueinander gemäß Referenzen oder Hash-Tabellen kodieren und derart die Geschwindigkeit im Hinblick auf einen Zugriff auf die referenzierten Bestandteile der semantischen Repräsentation erhöhen. Gemäß einer Ausführungsform ist die mindestens eine Referenz durch gehashte Listen und Zugriffsindizes implementiert.

Erfindungsgemäß weist das Prüfen der semantischen Repräsentation eine rekursive semantische Baumanalyse des mindestens einen semantischen Baumes auf, wobei die rekursive semantische Baumanalyse mit Termen startet, welche Wurzeln des mindestens einen semantischen Baumes darstellen. Durch eine Abbildung der semantischen Repräsentation auf eine Wald- und/oder Baumstruktur kann eine Prüfung durch rekursive Anwendung von Prüfregeln erfolgen, wodurch eine besonders einfache Verifikation des Regelwerks ermöglicht wird. Eine Waldstruktur kann hierbei eine Vielzahl der semantischen Bäume aufweisen.

Gemäß einer Ausführungsform weist die semantische Repräsentation mindestens eine Instanziierung auf, wobei die mindestens eine Instanziierung einen oder mehrere Werte für Symbole der semantischen Repräsentation aufweist. Die Instanziierung oder Instanz kann einen Zustand, Zielzustand oder gewünschten Zustand der Zielplattform oder des Zielsystems definieren. Entsprechend kann die mindestens eine Steuerungsvorschrift darauf ausgerichtet sein, den Zustand bei einer Ausführung von Befehlen durch die Zielplattform oder das Zielsystem zu erreichen. Die semantische Repräsentation kann mehrere Instanziierungen aufweisen. Hierbei können jeweils instanzabhängige Steuerungsvorschriften erzeugbar sein. Die instanzabhängigen Steuerungsvorschriften können in einer zeitlichen Abfolge voneinander abhängen, sodass mittels der Steuerungsvorschriften zunächst ein erster Zustand hergestellt wird und nachfolgend einer oder mehrere weitere Zustände.

In einer Ausführungsform umfasst das Verfahren ferner ein Transferieren der semantischen Repräsentation in einen Formaltext entsprechend der mindestens einen Angabe im Dokument. Hierdurch lassen sich in einer Sprache und/oder einem Dialekt definierte Regelwerke in eine weitere Sprache und/oder Dialekt überführen. Hierdurch kann das Verfahren sowohl im Hinblick auf eine sprachunabhängige Ansteuerung einer Zielplattform oder eines Zielsystems erreicht werden. Ferner können leicht verständliche Beschreibungen des Betriebs, des Ablaufs und/oder der Funktionalität, optional auch für eine oder mehrere Instanziierungen, für die Zielplattform oder das Zielsystem vollautomatisch formuliert werden.

Erfindungsgemäß ist ferner eine Vorrichtung zur Erzeugung von Steuerungsvorschriften angegeben, wobei die Vorrichtung eingerichtet ist, ein Verfahren nach einer oder mehreren Ausführungsformen der vorliegenden Erfindung auszuführen. Die Vorrichtung kann auf ein Dokument zugreifen, welches mindestens eine Angabe aufweist, die ein Regelwerk formuliert. Die Vorrichtung kann die mindestens eine Angabe gliedern, um eine Vielzahl von syntaktischen Blöcken zu generieren. Die Vorrichtung kann Terme und Symbole aus den syntaktischen Blöcken konstruieren, um eine semantische Repräsentation zu generieren. Die semantische Repräsentation kann durch die Vorrichtung geprüft werden. Die Vorrichtung kann mindestens eine Steuerungsvorschrift auf der Grundlage der geprüften semantischen Repräsentation erzeugen, wobei die mindestens eine Steuerungsvorschrift dem durch die mindestens eine Angabe formulierten Regelwerk entspricht.

Die Vorrichtung kann eine Vorrichtung mit einem Prozessor oder einer Verarbeitungseinheit sein. Die Vorrichtung kann ferner einen Speicher aufweisen, der Befehle speichern kann, welche bei Ausführung den Prozessor oder die Verarbeitungseinheit einrichten, das Verfahren gemäß Ausführungsformen der vorliegenden Erfindung auszuführen.

Die Vorrichtung kann gemäß bevorzugten Ausführungsformen eingerichtet sein, ein Verfahren gemäß beliebigen Ausführungsformen der vorliegenden Erfindung in beliebiger Kombination auszuführen.

Zudem ist ein erfindungsgemäßes System angegeben, welches eine steuer- und/oder regelbare Plattform, welche mittels mindestens einer Steuerungsvorschrift in einen Systemzustand versetzt werden kann, mindestens ein Speichermedium oder einen Datenträger, das/der mindestens eine Angabe speichert, die ein Regelwerk für die Plattform formuliert, und mindestens eine Vorrichtung, welche eingerichtet ist, aus dem durch die mindestens eine Angabe formulierten Regelwerk mindestens eine Steuerungsvorschrift für die Plattform zu erzeugen, wobei die mindestens eine Vorrichtung eingerichtet ist, ein Verfahren nach einer oder mehreren Ausführungsformen der vorliegenden Erfindung auszuführen.

Gemäß einer Ausführungsform versetzt die mindestens eine Steuerungsvorschrift die Plattform in einen in dem durch die mindestens eine Angabe formulierten Regelwerk spezifizierten Zielzustand.

Ausführungsformen des Verfahrens können beliebige Komponenten der Vorrichtung oder des Systems in beliebiger Kombination aufweisen. Ferner können Ausführungsformen der Vorrichtung oder des Systems funktionale Komponenten aufweisen, welche Verfahrensschritte des Verfahrens gemäß Ausführungsformen der vorliegenden Erfindung in beliebiger Kombination aufweisen können.

Weitere Vorteile der erfindungsgemäßen Vorrichtung und des Verfahrens ergeben sich aus der folgenden Beschreibung, in der die Erfindung anhand von Ausführungsbeispielen unter Bezugnahme auf die beigefügten Zeichnungen näher erläutert wird. Darin zeigen:
- Figur 1: ein Flussdiagramm eines Verfahrens zur Erzeugung von Steuerungsvorschriften gemäß einer Ausführungsform der vorliegenden Erfindung;
- Figur 2: eine schematische Darstellung eines Verfahrens zur Erzeugung von Steuerungsvorschriften gemäß einer Ausführungsform der vorliegenden Erfindung;
- Figur 3: ein schematisches Ablaufdiagramm eines Verfahrens zur syntaktischen Gliederung von textuellen Formulierungen eines Regelwerks, welches in Ausführungsforme der vorliegenden Erfindung anwendbar ist;
- Figur 4: ein schematisches Ablaufdiagramm eines Verfahrens zur Überführung von syntaktischen Blöcken in eine semantische Repräsentation, welches in Ausführungsformen der vorliegenden Erfindung anwendbar ist;
- Figur 5: eine schematische Darstellung einer Datenstruktur zur Implementierung einer semantischen Repräsentation, welche in Ausführungsformen der vorliegenden Erfindung anwendbar ist;
- Figur 6: ein schematisches Ablaufdiagramm eines Verfahrens zur Erzeugung von zielsystemabhängigen Steuerungsvorschriften, welches in Ausführungsformen der vorliegenden Erfindung anwendbar ist; und
- Figur 7: eine schematische Darstellung einer rekursiven semantischen Baumanalyse, welche in Ausführungsformen der vorliegenden Erfindung anwendbar ist.

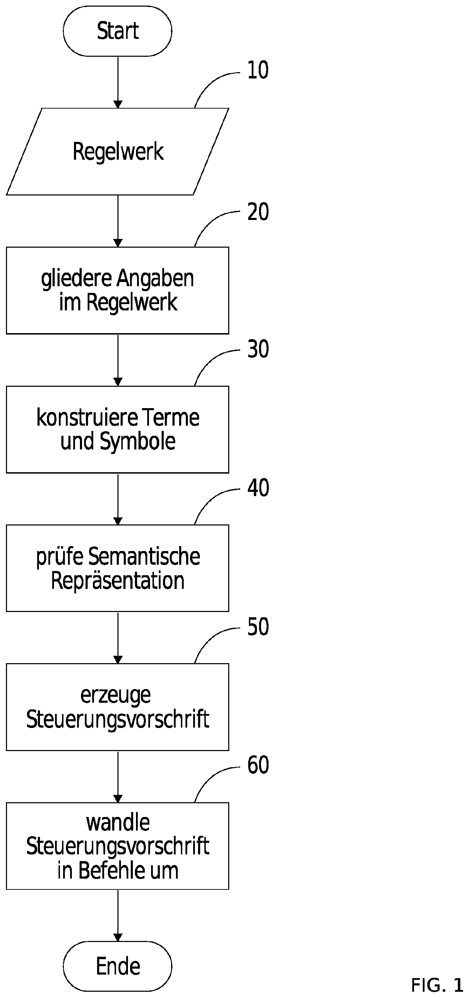

Figur 1 zeigt ein Flussdiagramm eines Verfahrens zur Erzeugung von Steuerungsvorschriften gemäß einer Ausführungsform der vorliegenden Erfindung. Das Verfahren bewirkt eine Erzeugung von Steuerungsvorschriften für eine Plattform. Ausgehend von einem Regelwerk 10 mit mindestens einer Angabe, welche zumindest teilweise das Regelwerk 10 formuliert, wird in Schritt 20 die Angabe gegliedert, um eine Vielzahl von syntaktischen Blöcken zu generieren. In Schritt 30 werden Terme und Symbole aus den syntaktischen Blöcken konstruiert, um eine semantische Repräsentation des Regelwerks 10 zu generieren. Die semantische Repräsentation wird in Schritt 40 geprüft. Dies kann eine Instanziierung des Regelwerks 10 für eine oder mehrere Instanzen umfassen, welche im Regelwerk 10 selbst spezifiziert sein können oder welche sich aus Zuständen der Plattform ergeben können. In Schritt 50 wird mindestens eine Steuerungsvorschrift auf der Grundlage der geprüften semantischen Repräsentation erzeugt. Die Steuerungsvorschriften entsprechen hierbei dem durch die mindestens eine Angabe formulierten Regelwerk 10.

In Schritt 60 wird die mindestens eine Steuerungsvorschrift in eine Vielzahl von plattformspezifischen Befehlen zur Ansteuerung einer Zielplattform umgewandelt. Die Steuerungsvorschrift kann einen aus dem Regelwerk 10 gewonnenen Befehl zur Steuerung der Zielplattform aufweisen.

Vorzugsweise ist die Plattform ein technisches System, ein mechanisches System, ein System im Bereich der Internet of Things (IoT), ein Cloud-System, ein Client-System und/oder mindestens ein auf einer solchen Plattform ausgeführtes Steuer- und/oder Regelprogramm. Die Plattform kann ein technisches System einer beliebigen Größe sein. So kann die Plattform eine industrielle Anlage sein oder eine IoT-Vorrichtung. Die Steuerungsvorschriften können ferner ein beliebiges Zielsystem konfigurieren, um beispielsweise ein Campus-Management-System oder ein Steuerungssystem einer Verfahrensanlage zu konfigurieren. Weitere Systeme sind denkbar und von der Erfindung mit umfasst.

Das in Figur 1 dargestellte Verfahren bewirkt, dass ein lesbarer und verständlicher Text (Ausgangstext) zur Definition des Regelwerks 10 verwendet werden kann, wobei der Text automatisch in die semantische Repräsentation umgesetzt wird, um die Steuerungsvorschriften für eine Zielplattform zu erstellen. Dies ermöglicht eine besonders intuitive Verwendung und Definition der Ansteuerung von Zielsystemen, welche gleichzeitig überprüfbar und vollautomatisch in zielplattformabhängige Befehle umsetzbar sein kann.

Ausführungsformen der Erfindung können somit eine Transformation eines formalen, aber natürlichsprachlich wirkenden Textes anhand einer definierten formalen Sprachdefinition in eine semantische Repräsentation mit logischen Aussagen betreffen, aus der in der technischen Umsetzung durch beispielsweise ein Computerprogramm eine Steuerung oder Regelung von komplexen Anlagen oder anderen Systemen realisiert werden kann. Ein Vorteil der Steuerung oder Regelung von Systemen auf Basis der einheitlichen semantischen Repräsentation besteht in der Prüfbarkeit der Konsistenz. Das definierte Regelwerk 10 stellt sowohl vor als auch während der Steuerung oder Regelung sicher, dass Fehlerzustände vermieden werden und dass der Weg zu einem definierten Zielzustand der Systeme stets deterministisch bleibt.

Hierbei können Systemkomponenten in einem konsistenten logischen Modell zusammengefasst werden, welches die Beweisbarkeit von Regeln des Regelwerks 10 garantiert. Dies kann eine praktische Anwendbarkeit in der Umsetzung ermöglichen, welche eine oder mehrere der folgenden Eigenschaften aufweisen kann:
- Erzeugung von Steuerungsvorschriften, aufweisend Befehle oder Aktoren unter Berücksichtigung eines Zielzustands des Regelwerks 10, welches ein hierarchisch logisches und zeitliches Gesamtregelwerks darstellen kann;
- Festlegung einer Anzahl von zu wählenden Optionen einer "Oder-Menge";
- Schichtung von Bedeutungsebenen;
- Erwartete Werte, die erst bei einer Instanziierung des Regelwerks 10 für eine konkrete Anwendung belegt werden;
- Integration von logischen und zeitlichen Aussagen;
- Formalisierung von Unschärfen, beispielsweise durch Wertebereiche;
- Geschachtelte Versionierung von Regelsätzen;
- Rückverfolgung von Regeln des Regelwerks 10 zur Quelle im Ausgangstext;
- Auswertung von mathematischen Termen mit Bezug zu Bedeutungsebenen; und/oder
- Nutzung einer Syntaxdialektik, um die semantische Repräsentation nutzerabhängig aber eindeutig sowohl aus dem Ausgangstext zu extrahieren als auch umgekehrt einen formalsprachlichen Text aus der Repräsentation zu erzeugen.

Eine Ausführungsform kann eine Abbildung einer natürlichsprachlich wirkenden, symbolischen Logik, die eine automatische und eindeutige Auswertung von Regelwerken erlaubt, mit einer Ausführung der logischen Folgerungen aus den Regeln bündeln. Die Formulierung von Unschärfen kann kontrolliert zugelassen werden, sodass klare Grenzen definiert werden und die Berechenbarkeit des Problems erhalten bleibt. Die dem Ausgangstext zugrundeliegende formale Sprache kann zeitliche Abhängigkeiten und logische Zusammenhänge in einer Weise verbinden, dass Deduktion, Regelkonformität und Anwendbarkeit auf Einzelfälle beherrschbar bleiben. Gleichzeitig kann die Formulierung von Aussagen so nah wie möglich an einer fachlichen Domäne und sprachlichen Bezeichnungen eines Nutzers belassen werden. Dies ermöglicht unterschiedlichen Anwendern eine einfache und lesbare Formulierung von logischen Regelwerken in Bezug auf technische Zielsysteme und Plattformen.

In einer besonders vorteilhaften Weise können Ausführungsformen der vorliegenden Erfindung auf Basis der semantischen Repräsentation, welche das Regelwerk 10 widerspiegelt, reale Anlagen oder andere komplexe (Computer-) Systeme steuern oder regeln.

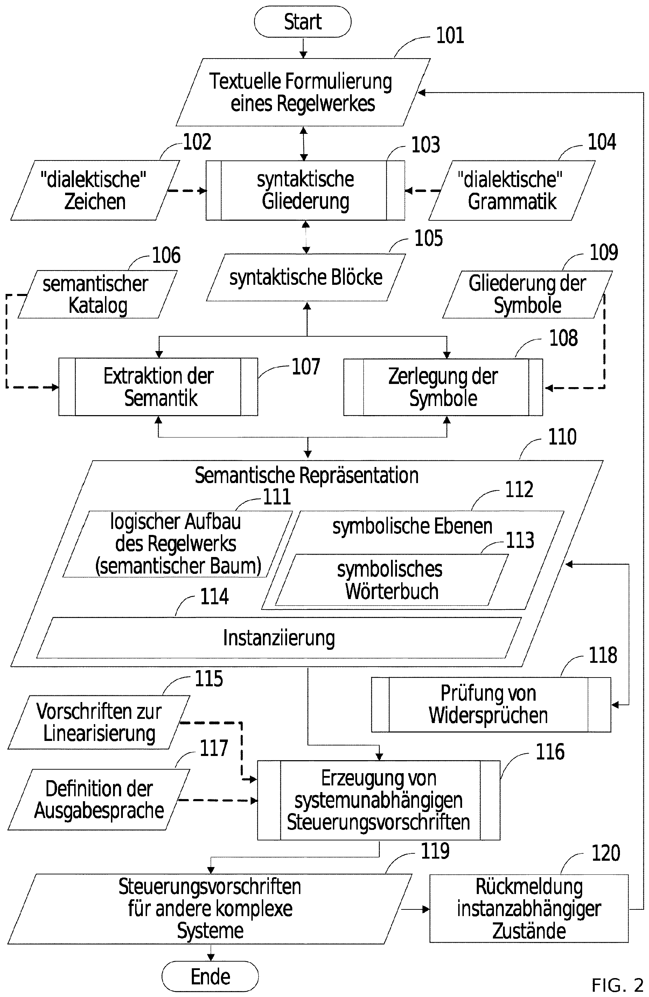

Figur 2 illustriert eine schematische Darstellung eines Verfahrens zur Erzeugung von Steuerungsvorschriften gemäß einer Ausführungsform der vorliegenden Erfindung. Figur 2 zeigt einen schematischen Gesamtablauf einer Umsetzung zur Erzeugung von Steuerungsvorschriften aus einem Regelwerk 101. Das Regelwerk 101 kann als Text formuliert sein, wobei eine entsprechende textuelle Formulierung des Regelwerks 101 über syntaktische Blöcke 105 in eine semantische Repräsentation 110 inkl. deren Prüfung 118 und deren instanziierte Auswertung zur Erzeugung der Steuerungsvorschriften 119 umgewandelt werden kann, welche zur Ansteuerung von software- und/oder hardwaretechnischen Systemen verwendet werden können. Die Umwandlung kann Transformationsschritte der syntaktischen Gliederung 103, eine Extraktion einer Semantik 107, eine Zerlegung in Symbole 108 und eine daraus resultierende Erzeugung der zielsystem-abhängigen Steuerungsvorschriften 116 aufweisen.

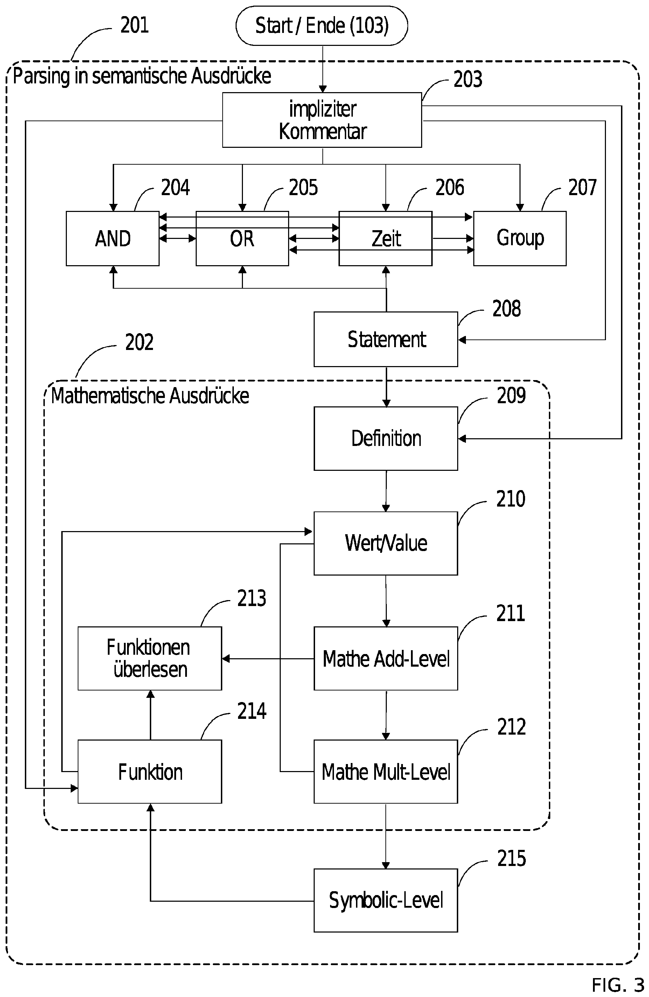

Ausgangspunkt zur Erzeugung der semantischen Repräsentation 110 kann die textuelle Formulierung des Regelwerks 101 in einem formalen Text sein, wobei konfigurierte dialektische Regeln aus Zeichen 102 und Grammatik 104 berücksichtigt werden. Der formale Text kann sowohl definierte logische und zeitliche Aussagen für das Regelwerk 101 als auch Wertzuweisungen von einer oder mehreren Instanzen für symbolische Ebenen sowie zur Steuerung benötigte Befehle, bspw. Aktor-Befehle, aufweisen. Eine Instanz kann hierbei eine Abbildung einer konkreten Situation für das Regelwerk 101 sein. Beispielhaft können hier Sensorwerte einer zu betrachtenden Systemlandschaft oder Werte einer Entität eines Softwaresystems als Systemzustand abgebildet werden. Dabei können die Zeichen 102 und die Grammatik 104 im Rahmen einer syntaktischen Gliederung 103, welche nachfolgend in Bezug auf Figur 3 gemäß einer bevorzugten Ausführungsform dargestellt ist, zur eindeutigen Interpretation des formalen Textes in syntaktische Blöcke 105 gewandelt werden. Vorzugsweise können hierbei nicht für die Regelabbildung relevante Textpassagen, die aber für den Menschen wichtige zusätzliche Erläuterungen enthalten können, ebenso extrahiert werden wie die logischen Aussagen und deren hierarchische Gliederung.

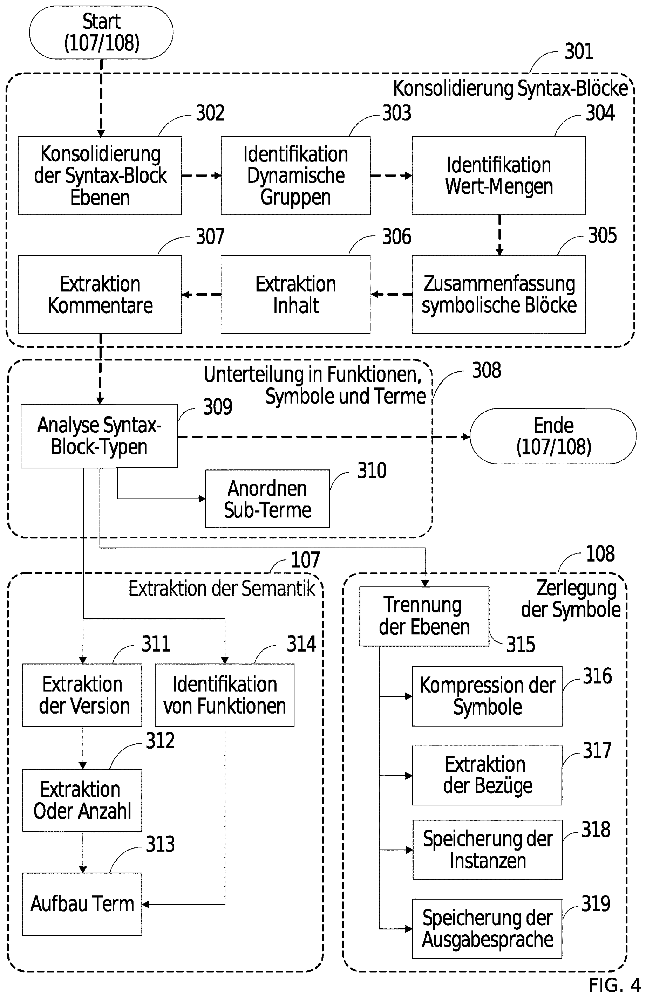

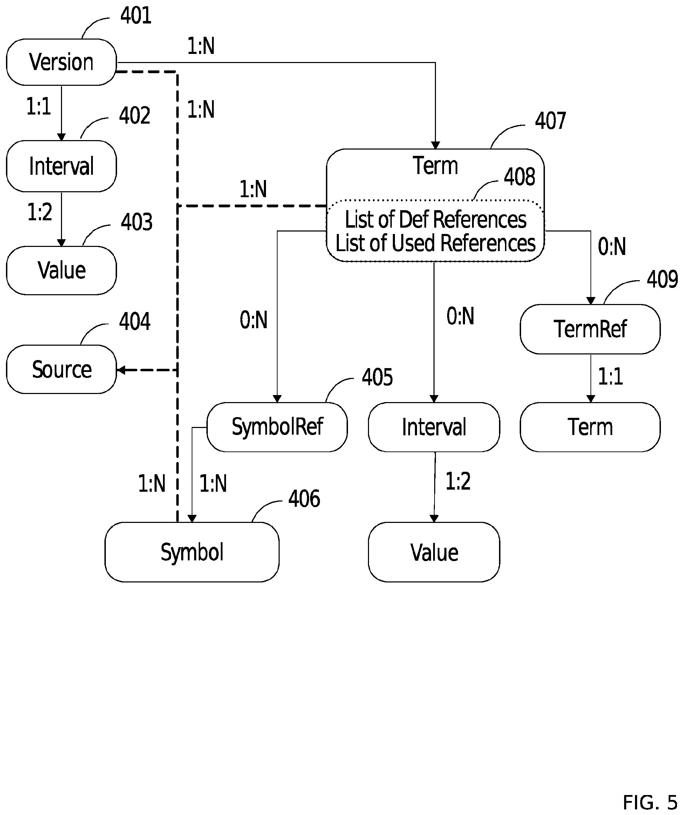

Nach der Erzeugung der gegliederten syntaktischen Blöcke 105 können im Rahmen der Extraktion der Semantik 107, welche im Folgenden gemäß einer bevorzugten Ausführungsform in Figur 4 gezeigt ist, unter Berücksichtigung eines semantischen Kataloges 106 die definierten (und zulässigen) logischen und zeitlichen Aussagen sowie eine Versionsgliederung des Regelwerks 101 in einen semantischen Baum 111, vorzugsweise in referenzierende Terme und Versionen überführt werden, vgl. hierzu auch Figur 5 für eine bevorzugte Ausführungsform. Außerdem können unabhängig von einer logischen Regelhierarchie der Terme die in den Formaltexten frei definierbaren Symbole/Ausdrücke mithilfe einer Gliederung der Symbole 109 zerlegt 108 und als symbolische Ebenen 112 mit erkannten Symbolschreibweisen als symbolisches Wörterbuch 113 in der Symbolstruktur abgebildet werden. Im Falle der syntaktischen Erkennung einer Instanziierung 114 kann diese zusätzliche Wertinformation eines Symbols zur Ableitung von notwendigen Steuerungssequenzen einer Regelauswertung gespeichert werden.

Diese Art der Gliederung erlaubt, die erzeugte semantische Repräsentation 110 wieder in einen Formaltext zurück zu transferieren. Da während dieser Rückwärtstransformation eine andere Dialektik genutzt werden kann, kann der dann erzeugte Formaltext einer erwarteten Dialektik des jeweiligen Anwenders entsprechen, wodurch das Regelwerk 101 in einer konkreten Domäne des Anwenders bereitgestellt oder angezeigt werden kann.

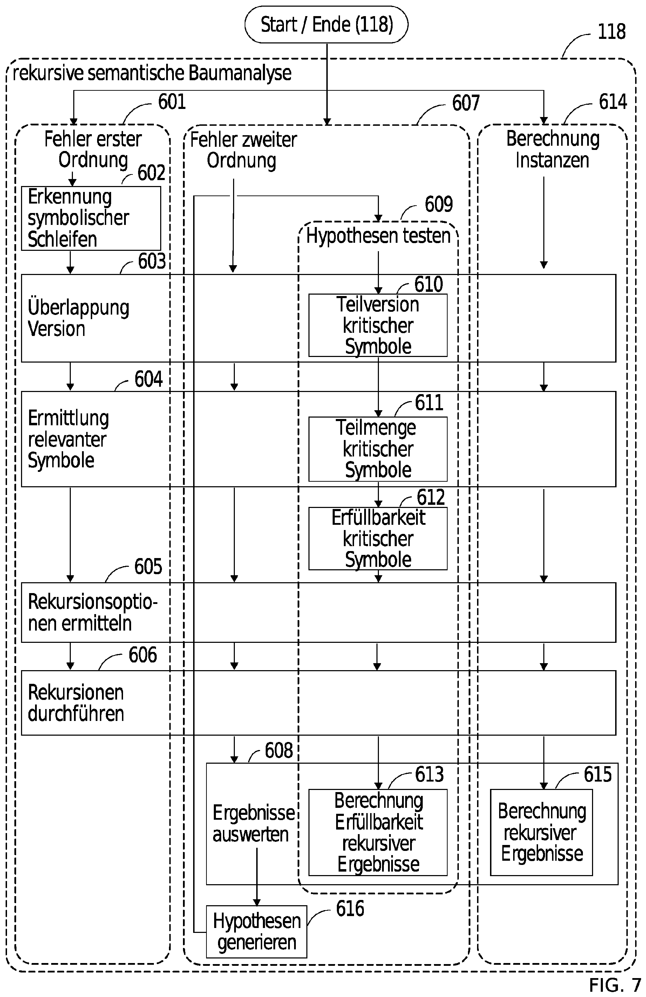

Nach dem Aufbau der semantischen Repräsentation 110 mit dem Regelwerk 101 kann dieses unabhängig von einer Instanziierung geprüft werden 118. Eine vorteilhafte Ausgestaltung der Prüfung 118 wird nachfolgend in Bezug auf Figur 7 beschrieben. In Schritt 118 können bereits vor einer Instanziierung logische Widersprüche in dem Regelwerk 101 erkannt werden. Diese verhindern unter anderem effektiv eine Fehlsteuerung der Systeme, bevor das Regelwerk 101 zum Einsatz kommt. Da die Prüfung 118 fortlaufend stattfinden kann, kann der Anwender bereits während der Formulierung des Regelwerks 101 auf logische Fehler hingewiesen werden.

Eine Instanziierung 114 kann für beliebige Regeln sowohl aktuelle Zustände als auch einen zu erreichenden Zielzustand des Regelwerks 101 setzen. Zur Erreichung des Zielzustands notwendig zu erfüllenden Regeln sowie die zu einer Entscheidung anstehenden Regeln (bspw. Menge der offenen Oder-Kombinationen) können bestimmt werden und die dadurch als fehlend identifizierten Aktoren erzeugt werden 116. Die Aktoren können in einem nächsten Schritt in einen linearen Ablauf transformiert werden. Dazu können zeitliche Reihenfolgen ebenso wie Zugehörigkeiten zu Versionen und eine Position in einer Regelhierarchie gemäß einer aktuellen Konfiguration von Linearisierungsvorschriften 115 berücksichtigt werden. Die in einer Ausgabesprache 117 definierten Aktoren und entsprechende Aktor-Befehle können so in die Steuerungsvorschriften 119 übersetzt werden. Eine Definition der Ausgabesprache 117 kann z.B. HTTP-Posts aufweisen, welche die Aktoren anderer software- und/oder hardwaretechnischer Systeme über Webservices direkt auslösen können. Es sollte jedoch verständlich sein, dass die Definition andere Befehle und anderweitige syntaktische Konstrukte aufweisen kann, welche dazu geeignet sind, die Ausgabesprache 117 zu definieren. In der vorgenannten beispielhaften Ausführungsform kann beispielsweise eine Steuerung einer Smart-Home Anlage in derselben Art und Weise realisiert werden wie eine Orchestrierung von Cloud-Services aus komplexen parallelen Computersystemen.

Sofern Instanziierungen 114 auf Basis von Steuerungsvorschriften 119 (z.B. Get-Aktoren betreffend z.B. Sensorwerte) in die semantische Repräsentation 110 transferiert werden, können Rückmeldungen instanzabhängiger Zustände 120 die semantische Repräsentation 110 der Instanz 114 aktualisieren. Dies kann kontinuierlich, also jederzeit, in gewählten Abständen oder Intervallen oder getriggert erfolgen, beispielsweise bei Änderung eines durch die Steuerungsvorschrift 119 abgefragten Zustands.

Figur 3 stellt ein schematisches Ablaufdiagramm eines Verfahrens zur syntaktischen Gliederung von textuellen Formulierungen eines Regelwerks dar, welches in Ausführungsformen der vorliegenden Erfindung anwendbar ist.

Das in Figur 3 dargestellte Verfahren kann auf den in Figuren 1 und 2 gezeigten Verfahren aufsetzen, beispielsweise in Verfahrensschritt 103 aus Figur 2. Dies ist jedoch keinesfalls erforderlich. Figur 3 illustriert technische Schritte zur Übersetzung eines formalen Textes in einem rekursiven Parser 201, beispielsweise des formalen Textes zur Definition des Regelwerks 101 aus Figur 2 oder des Regelwerks 10 aus Figur 1, in syntaktisch gegliederte Blöcke, welche den syntaktischen Blöcken 105 aus Figur 2 entsprechen können. Entsprechend kann auf die Komponenten aus Figur 1 oder 2 Bezug genommen werden, wobei dies beispielhaft zu verstehen ist. So kann der rekursive Parser 201 unter anderem die dialektischen Zeichen 102 sowie Syntaxdefinitionen aus der dialektischen Grammatik 104 der zu analysierenden Sprache und/oder des Regelwerks 101 als Konfiguration voraussetzen.

Eine Analyse und Transformation von semantischen Ausdrücken und mathematischen Ausdrücken im rekursiven Parser 201 kann technisch als ein konfigurierbarer rekursiv ausgeführter endlicher Automat realisiert sein. Dabei können Statusübergänge zwischen allen Zuständen 203 bis 215 die Syntaxdefinition als dialektische Grammatik 104 einer Ausgangssprache darstellen. Ein Statusübergang kann jeweils durch eine nächste vollständig erkannte Zeichenkette oder deren Alternativen aus den dialektischen Zeichen 102, beispielsweise gemäß der nachfolgenden Tabelle, festgelegt werden. Der Bereich vor einem gefundenen Zeichen kann durch einen Aktionsblock bearbeitet werden, vorzugsweise aufweisend Speicherung einer Textquelle und von korrespondierenden semantischen Bedeutungen, und der Bereich nach dem letzten gefundenen Zeichen in dem dann folgenden Status linear bzw. mit Rekursion fortgesetzt werden. Eine Rekursionsebene kann daher mit einer Schachtelungstiefe von Termen bzw. mathematischen Ausdrücken korrespondieren.

Hierbei können gemäß einem Beispiel die folgenden Token mit folgender Bedeutung und Codierung gewählt sein, wobei die vorliegende Erfindung nicht auf bestimmte Symbole, Definitionen und Beschreibungen beschränkt ist.

| Name des Tokens | Zeichen der ersten Al-ternative im Default Dialekt | Beschreibung |
|---|---|---|
| SymTokenEqual | := | Zuweisung bzw. Definition |
| SymTokenAndOpen | [ | Öffnen der Mitglieder einer mit logischen "Und" verbundenen Menge von Aussagen |
| SymTokenAndClose | ] | Schließen der Mitglieder einer mit logischen "Und" verbundenen Menge von Aussagen |
| SymTokenOrOpen | { | Beginn der Liste von Mitgliedern einer mit logischen "Oder" verbundenen Menge von Aussagen |
| SymTokenOrClose | } | Ende der Liste von Mitgliedern einer mit logischen "Oder" verbundenen Menge von Aussagen |
| SymTokenVersion | # | Abgrenzung einer Versionsdefinition vor dem Zeichen von der nachfolgenden Regelaussage |
| SymTokenTimeBefore | « | Trennzeichen zwischen einem Symbol, das **zeitlich vor** einem anderen Symbol liegen soll, bzw. Ende der Symbolaufzählung nach zeitlichen Aussagen. |
| SymTokenTimeAfter | » | Trennzeichen zwischen einem Symbol, das **zeitlich nach** einem anderen Symbol liegen soll, bzw. Ende der Symbolaufzählung nach zeitlichen Aussagen. |
| SymTokenAdvice | ! | Beginn einer Empfehlung, die nach diesem Zeichen beginnt |
| SymTokenCheck | ? | Beginn einer Prüfaussage, die nach diesem Zeichen beginnt |
| SymTokenGroup | ∼ | Beginn bzw. Ende der Liste von Mitglieder einer Menge von Aussagen, die nicht logisch verbunden sind, sondern nur ggf. unter neuem symbolischen Namen gruppiert werden |
| SymTokenFunctionOpen | ( | Beginn einer Folge von Argumentwerten für eine Funktion. Vor der Klammer wird der Funktionsname erwartet. |
| SymTokenFunctionClose | ) | Abschluss einer Folge von Argumentwerten für eine Funktion. |
| SymTokenOpPlus | + | Infix Operator für die Addition |
| SymTokenOpMinus | - | Infix Operator für die Subtraktion |
| SymTokenOpMultiply | * | Infix Operator für die Multiplikation |
| SymTokenOpDivide | / | Infix Operator für die Division |
| SymTokenCompEqual | == | Vergleichsoperator für gleiche Werte |
| SymTokenCompLess | < | Vergleichsoperator für einen kleineren Wert |
| SymTokenCompLessEqual | <= | Vergleichsoperator für einen kleiner oder gleichen Wert |
| SymTokenCompGreater | > | Vergleichsoperator für einen größeren Wert |
| SymTokenCompGreaterEqual | >= | Vergleichsoperator für einen größer oder gleichen Wert |
| SymTokenGlobalMax | +∞ | symbolischer Ersatz für den **größten** anzunehmenden Wert in Intervallen |
| SymTokenGlobalMin | -∞ | symbolischer Ersatz für den **kleinsten** anzunehmenden Wert in Intervallen |
| SymTokenAnnounced | % | Substitut-Zeichen für angekündigte Werte, die erst im Zuge einer Instanziierung geliefert werden |
| SymTokenLimit | L | Suffixzeichen für die Ausgrenzung des Wertes aus einem Intervall |
| SymTokenElement | , | Trennzeichen zwischen Argumenten von Funktionen oder Wertevorräten (Ranges) von Symbolen |
| SymTokenIDDevider | . | Trennzeichen zwischen Hierarchie-Ebenen von Symbolen zur Kaskadierung von Bedeutungen |
| SymTokenInstanz | @ | Trennzeichen zwischen Symbol und der Benennung einer konkreten Instanz |
| SymTokenInterval | \| | Trennzeichen zwischen dem kleineren und größeren wert eines Intervalls |
| SymTokenEoS | ; | Zeichen zum Abschluss von Regeln. Nachfolgende Textpassagen sind implizit Kommentare, solange keine Regelkonformen Aussagen getroffen werden. |
| SymTokenLineComment | // | Zeichen zum Start eines Kommentars innerhalb von Regelaussagen. Die übrigen Zeichen bis zum Zeilenende werden nicht als Regel oder mathematischer Term interpretiert. |
| SymTokenCommentStart | /* | Zeichen zum Start eines mehrzeiligen Kommentars, der beliebige Zeichen enthalten darf und explizit mit dem Kommentar-Ende gekennzeichnet werden muss. |
| SymTokenCommentEnd | */ | Zeichen zum Ende eines mehrzeiligen Kommentars, der beliebige Zeichen enthalten darf und explizit mit dem Kommentar-Start geöffnet wurde. |
| SymTokenSpace | " " | Zeichen, die überlesen werden und nicht als Inhalt von Symbolen gelten |
| SymTokenEOL | \n | Zeichen welches das Zeilenende markiert und damit den einzeiligen Kommentar begrenzt. |

Damit können Pfeile in Figur 3 einem Rekursionsübergang zwischen den Zuständen 203 bis 215 entsprechen. Die jeweiligen Namen dieser Übergänge können den semantischen Konstrukten der formalen Sprache entsprechen. Ausnahmen bilden z.B. die Statusübergänge, die zur Kaskadierung von mathematischen Termen benötigt werden (Funktion überlesen) und weitere Übergänge, welche im Zustand 203 zusammengefasst sein können, da diese beispielsweise nur eine Unterscheidung von Kommentaren oder Fehlerzuständen beim Parsing als nicht funktionale Blöcke betreffen können. Zeilenenden sowie Leerzeichen (u.ä.) können innerhalb von Regeln überlesen werden. Zusätzlich kann nach einem Zeilenende jeweils eine potentielle Versionsangabe starten, die von einer Regel gefolgt sein könnte. Wenn keine Regel folgt, bleibt die Interpretation bei einem impliziten Kommentar 203.

Der rekursive Parser 201 kann in einen davor liegenden Zustand zurückkehren, wenn ein zu analysierender Teiltext beendet wurde und kein weiteres Zeichen für einen Statusübergang erkannt wurde. Im Fall von Klammerhierachien oder eingestreuten Kommentaren kann dies zu einer mehrfachen Betrachtung des gleichen Textabschnitts unter der jeweils anderen Deutung des aktuellen Zustands führen.

Ausgangspunkt des rekursiven Parsers 201 für semantische Ausdrücke kann der implizite Kommentar 203 sein, da tatsächliche Regeln von beliebigem Text umgeben sein können. Innerhalb der semantischen Ausdrücke können Und-Terme 204, Oder-Terme 205, zeitliche Aussagen 206 und Gruppen 207 in fast beliebiger Weise geschachtelt sein. Eine Ausnahme kann eine Schachtelung von zeitlichen Aussagen sein, da diese vorzugsweise nicht in neutralen Gruppen enthalten sein dürfen. Verbleibende Textabschnitte innerhalb der semantischen Ausdrücke sind stets Symbole, welche als solche noch ohne Zerlegung 108 in den syntaktischen Blöcken 105 gespeichert werden. Semantischen Regel-Aussagen selbst können (mit der Ausnahme der reinen Gruppenaussage) potentiell als Empfehlungen oder Prüfaussagen einmalig über das Statement 208 gekapselt sein.

In der gleichen Weise können Prüfaussagen und Empfehlungen eine Definition 209 als Ausgangspunkt von mathematischen Ausdrücken 202 von einem regelnden Kontext in den jeweils anderen semantischen Zusammenhang sein. Abstufungen von Bindungskräften von mathematischen Operatoren in Termen (die s.g. Operatorrangfolge oder -präzedenz) kann in mehreren Zustandsstufen von einer Liste von Werten 210 über die mathematische Addition inkl. Subtraktion 211 und Multiplikation inkl. Division 212 bis zu Funktionsklammern 214 ausgestaltet sein. Funktionsnamen selbst können auf dieser Ebene noch nicht von Symbolen 215 unterschieden werden, da hier erst ein späterer Analyseschritt verantwortlich sein kann. Das Überlesen von weiteren Funktionshierarchien in Schritt 213 kann eine Gruppierung von zusammenhängenden Satzstrukturen ermöglichen, wenn diese ähnlich zu einem Nebensatz durch Einschübe unterbrochen sind.

Im Zuge der Analyse im rekursiven Parser 201 im Durchlaufen der Statusübergänge der Zustände 203 bis 215 können die syntaktischen Blöcke 105 als Annotation des formalen Textes des Regelwerks 101 generiert werden. Diese dokumentieren vorzugsweise die ursprüngliche Quelle des gelesenen Textabschnitts und verknüpfen den jeweiligen Textabschnitt mit der durch die dialektischen Zeichen 102 und Syntax extrahierten Bedeutung. Auf dieser Ebene kann somit eine Zuordnung von einzelnen Zeichen des jeweils konfigurierten Dialekts zu der semantischen Bedeutung im Sinne der formalen Sprache vollzogen werden.

Gemäß einem Beispiel kann eine Konfiguration des rekursiven Parsers 201 für einzelne Statusübergänge wie folgt gegeben sein:

| Aktueller Ausgangszustand | Übergangszustand beim finden des Symbols | Menge von Symbolen | Aktion für Text vor dem gefundenen Symbol | Statusübergang im Fall einer Rekursion in den Aktionen vor dem Symbol | Aktion für Text nach dem gefundenen Symbol | Statusübergang im Fall einer Rekursion in den Aktionen nach dem Symbol | Zugeordneter Term-Typ für erzeugten Syntaxblock |
|---|---|---|---|---|---|---|---|
| Section-Implicit-Comment | Section-Definition | Sym-Token-Equal | Action-Cont, Action-Recurse | Section-Definition | {} | {} | Term-Define |
| Section-Implicit-Comment | SectionGroup | Sym-Token-Group | Action-Cont, Action-Recurse | Section-Group | {} | {} | Term-Group |
| Section-MathMul | Section-SkipFuncDef | SymToken-Function-Open | Action-UpdCurrPos, Action-Recurse | Section-SkipFunc-Def | {} | {} | Term-Type-Undef |
| Section-Definition | Section-Definition | SymTokenEoS | Action-Reparse | Section-Value | Action-Cont, Action-Return | Section-Success | Term-Value |
| SectionValue | SectionValue | Sym-Token-Element | Action-Reparse | Section-MathAdd | Action-Cont | Section-Value | TermArg-Element |
| Section-Symbol | Section-FuncDef | Sym-Token-Function-Open | Action-Reparse, Action-Upd-CurrPos | Section-Symbol | Action-Recurse | Section-FuncDef | Term-Type-Undef |

Figur 4 ist ein schematisches Ablaufdiagramm eines Verfahrens zur Überführung von syntaktischen Blöcken in eine semantische Repräsentation, welches in Ausführungsformen der vorliegenden Erfindung anwendbar ist.

Das in Figur 4 dargestellte Verfahren kann auf dem in Figur 2 gezeigten Verfahren aufsetzen, beispielsweise auf den Verfahrensschritten 107 und/oder 108. Andere Variationen sind aber denkbar. In dem Verfahren gemäß Figur 4 kann auf die Komponenten aus Figur 2 Bezug genommen werden, wobei dies beispielhaft zu verstehen ist. So kann die Verarbeitung die syntaktischen Blöcke 105 aus dem formalen Text betreffen. Die Verarbeitung kann mit einem Parser erfolgen.

Das Verfahren kann in Schritt 301 mit einem linearen Verfahren (gestrichelte Pfeile) für alle syntaktischen Blöcke 105 einheitlich mit einer Konsolidierung der enthaltenen Information beginnen.

Da Rekursionsebenen insbesondere beim Parsen von mathematischen Termen Lücken aufweisen können, können diese Lücken dadurch reduziert werden, dass logisch benachbarte Blöcke maximal eine Ebene unter den direkten Nachbarn liegen dürfen. Eine entsprechende Konsolidierung erfolgt in Schritt 302. Der Parser unterscheidet beim Start von Gruppen nicht, ob die folgenden symbolischen Werte durch Intervallbezeichnungen als dynamische Gruppen verwendet wurden. Daher kann diese Information nachträglich auf Basis der vorliegenden Gesamtsicht der Syntaxblöcke ermittelt und der Gruppentyp ggf. auf dynamische Gruppe verändert werden, welche in Schritt 303 identifiziert werden.

Weiterhin kann eine Unterscheidung von Einzelwerten und Wertmengen dafür herangezogen werden, dass eine Zuweisung einer Wertmenge zu einem Symbol als Angabe aller gültigen Werte (Range) interpretiert wird. Eine Identifikation von Wertmengen erfolgt in Schritt 304. An allen anderen Stellen im Regelwerk 101 kann für ein entsprechendes Symbol in der jeweiligen hierarchischen Ebene eine Einschränkung der tatsächlichen Werte (in Definitionen und Instanziierungen) erfolgen, sodass unplausible Werte schon bei der Definition des Regelwerks 101 oder bei einer Übergabe einer Instanz zuverlässig detektiert werden können.

Da im Regelwerk 101 an beliebigen Stellen (auch innerhalb von Symbolen) Kommentare eingebettet sein dürfen, werden die entsprechenden syntaktischen Blöcke in Schritt 305 so zusammengefasst, dass die Kommentare zu einem Symbol von dem eigentlichen Symbolnamen getrennt verarbeitet werden können. Entsprechend einer spezifischen Eltern / Kind Relationen der Ebenenhierarchie der syntaktischen Blöcke 105 werden eingebettete Kommentare erkannt und entsprechende Cluster der syntaktischen Blöcke 105 und Kommentare neu gebildet.

Danach kann der Inhalt der syntaktischen Blöcke 105 eindeutig in Inhalte und/oder Kommentare unterschieden werden, ohne dass diese sich weiterhin überschneiden. Die Inhalte können in Schritt 306 extrahiert werden. Die Kommentare können in Schritt 307 extrahiert werden. Diese Zwischenform von zusammengefassten Abschnitten des formalen Textes kann danach als Ausgangsbasis für Terme oder symbolische Extraktion bzw. eine Identifikation von Funktionsnamen dienen, welche im Transformationsschritt 308 verarbeitet werden. Innerhalb des Transformationsschritts 308 kann anhand der beim Parsen im Parser 201 in den syntaktischen Blöcken 105 annotierten Typen, welche auch als Termtypen bezeichnet werden können, in einem rekursiven Verfahren (durchgezogene Pfeile) eine Bildung der Terme, Symbole und Funktionen vorgenommen werden.

Für Termtypen aus dem Bereich der symbolischen und mathematischen Ausdrücke werden Terme (bzw. Sub-Terme) gebildet 107 und gespeichert. Schritt 107 aus Figur 4 kann hierbei Schritt 107 aus Figur 2 entsprechen. Vor der Bildung eines Terms kann zunächst in Schritt 311 eine Versionsangabe als Intervallwert extrahiert werden, sofern der Term über eine solche Angabe verfügt. Für Oder-Terme kann eine weitere Intervallangabe vorliegen, die in Schritt 312 eingelesen und am Term gespeichert werden kann. Schließlich können alle Daten in einem neuen Term-Objekt zusammengefasst und der entsprechende Termtyp kann gemäß der geparsten Information des syntaktischen Blocks 105 in Schritt 313 gesetzt werden, wie es nachfolgend in Bezug auf Figur 5 und eine besonders bevorzugte Ausführungsform gezeigt ist.

Aus vordefinierten mathematischen Funktionen, welche beliebige mathematische Funktionen aufweisen könne, beispielsweise eines oder mehrere aus min, max, count und weitere, und welche in Schritt 314 identifiziert werden können, können ebenfalls Sub-Terme gebildet werden. Das Term-Objekt wird in Schritt 313 erzeugt. Die entstandenen Term-Objekte können nach der Rekursion in einen ggf. bereits vorhandenen Termbaum eingefügt werden 310.

Aus syntaktischen Blöcken 105, die keinem Termtyp zugeordnet sind (undefined), können in Schritt 108 symbolische Bezeichner abgeleitet und gespeichert werden. Schritt 108 aus Figur 4 kann hierbei Schritt 108 aus Figur 2 entsprechen. Zunächst können in Schritt 315 verschiedene Bestandteile voneinander getrennt werden. In Schritt 316 kann ein ermittelter symbolischer Name ohne Leerzeichen als Repräsentation ohne Groß-Kleinschreibung als "compressed" und nach Ebenen gespeichert werden. Bezüge können in Schritt 317 extrahiert werden und ein entsprechender Bezugstyp kann von den Ebenen separiert und ebenfalls zum Symbol hinzugefügt werden. Im Fall von Werten, welche Instanzen zugeordnet sind, können diese in Schritt 318 in einer einem entsprechenden Instanznamen zugeordneten Speicherstruktur abgelegt werden, sodass alle Werte der Instanz in direktem Zugriff vorhanden sind. Für eine Definition einer Ausgabesprache, beispielsweise die Definition der Ausgabesprache 117 aus Figur 2, können diese Werte in ähnlicher Weise wie Instanzen gespeichert werden. Die Angabe, für welchen Wert eine Ansteuerung eines Aktors zu erfolgenden hat, kann als Intervall abgelegt werden, sodass für einen definierten Wertebereich die Ausgabe gleichermaßen erfolgen kann 319.

Es sollte verständlich sein, dass in Ausführungsformen einzelne Schritte und Abschnitte des in Figur 4 dargestellten Verfahrens nicht vorgesehen sein müssen und/oder in beliebiger Kombination in einer anderen als der dargestellten Reihenfolge und zumindest teilweise parallel ausgeführt werden können.

Das Ergebnis der Verarbeitung gemäß Figur 4 kann in eine semantische Repräsentation, beispielsweise die semantische Repräsentation 110 aus Figur 2 eingepflegt werden.

Figur 5 zeigt eine schematische Darstellung einer Datenstruktur zur Implementierung einer semantischen Repräsentation, welche in Ausführungsformen der vorliegenden Erfindung anwendbar ist. Figur 5 zeigt einen technischen Aufbau zur Speicherung einer semantischen Repräsentation, beispielsweise der semantischen Repräsentation aus Figur 1 oder der semantischen Repräsentation 110 aus Figur 2. In der Struktur gemäß Figur 5 kann auf die Komponenten aus Figur 1 oder 2 Bezug genommen werden, wobei dies beispielhaft zu verstehen ist.

Logischen Aussagen können durch drei Strukturen abgebildet werden, aufweisend eine Version 401, ein Symbol 406 und einen Term 407. Deren Quelle im Sinne einer Referenzierung auf den Ort im Regelwerk 101 oder 10 kann durch eine Source-Struktur 404 abgebildet sein. Logische Aussagen können auch als Statements betrachtet werden. Jedes Statement kann hierbei einen Graphen ohne geschlossene Pfade, beispielsweise als Out-Tree oder einen Baum darstellen, wobei ein Term 407 eine Wurzel des Statements darstellen kann. Die in einem Statement angegebene Version 401 kann auf ein Versionsintervall 402 verweisen, welches ein bzw. zwei Werten 403 aufweisen kann. Die Version 401 oder ein Versions-Objekt kann zusätzlich auf alle Terme 407 und dadurch gebildete Graphen oder Bäume mit logischen Aussagen verweisen, die dem Versionsintervall 402 entsprechen. Der Term 407 oder ein entsprechendes Term-Objekt können in abstrakter Weise ein Statement repräsentieren, welches symbolische Bezeichner 405 sowie weitere implizite Statements 409 als auch Werte aufweisen bzw. auf diese referenzieren kann. Da deren Reihenfolge wesentlich für die Verarbeitung sein kann, können die Referenzen aufgeteilt in definierende (List of Def References) und genutzte Referenzen (List of Used References) abgelegt werden 408. Vorzugsweise können alle in den Termen genutzten Werte (z.B. für mathematische Funktionen) in Form von Intervallen 402 mit ihrem Wert bzw. Werten beliebigen Typs abgelegt werden.

Dabei kann eine Prüfung auf Konsistenz zu einem andernorts definierten Wertebereich ermöglich werden, vgl. hierzu Figur 7. Ein zusätzlicher Verweis auf die den Objekten jeweils zugrunde liegende Quelle kann eine direkte Rückverfolgung zwischen Fehler bzw. späterem Steuerbefehl und der ursächlichen Regel ermöglichen, was zu einer deutlichen Erhöhung der Transparenz führt. Erkannte implizite Kommentare können ebenfalls an dem jeweiligen Statement bzw. direkt am symbolischen Bezeichner abgelegt werden. Die in der Umsetzung verwendeten Datenstrukturen werden in der folgenden Tabelle dargestellt, welche eine Übersicht über elementare Strukturinhalte beispielhaft zeigt.

| Hauptstuktur | Felder/Struktur | Beschreibung |
|---|---|---|
| Term | UID | Eindeutige ID des Terms zur Referenzierung |
| | MyType | Semantischer Typ (And, Or etc.) |
| | Value[] | Liste von Intervallen |
| | ListofTermRefs[] | Liste der Verweise auf hierarchisch abhängige Terme |
| | ListofSymbolRefs[] | Liste der Verweise der definierenden und genutzten Symbole |
| | MySource[] | Verweisliste auf die Quellinformationen des Terms |
| | MyRootTerm | Verweis auf die Term-Wurzel des Gesamtstatements |
| | MyVersion | Verweis auf die genannte Version des Gesamtstatement |
| | ListofDefRefs[] | Sortierte Verweisliste auf Value, TermRef, SymbolRef der definierenden Referenzen |
| | ListoftUsedRefs[] | Sortierte Verweisliste auf Value, TermRef, SymbolRef der genutzten Referenzen |
| Symbol | Name | Eindeutiger semantischer Name der Symbolebene (bereinigt um Groß/Kleinschreibungsvarianten, Fallunterscheidungen etc.) |
| | ListOfOtherNames[] | Liste der verwendeten alternativen Schreibweisen |
| | ListOfDefTerms[] | Liste von Verweisen auf Terme, in denen das Symbol als definierendes Symbol enthalten ist |
| | MySources[] | Verweisliste auf die Quellinformationen, in denen das Symbol verwendet wird |
| Version | Name | Bezeichner einer Version |
| | Range | Intervall der Gültigkeit für der abhängigen Terme |
| | ListOfTerms[] | Liste von Verweisen auf alle Termen mit der gleichen Versions-Range |
| | Overlap | Identifikationskennzeichnung, ob sich die Versions-Range mit einer anderen Version überlappt |
| | MySource[] | Verweisliste auf die Quellinformationen der Version |

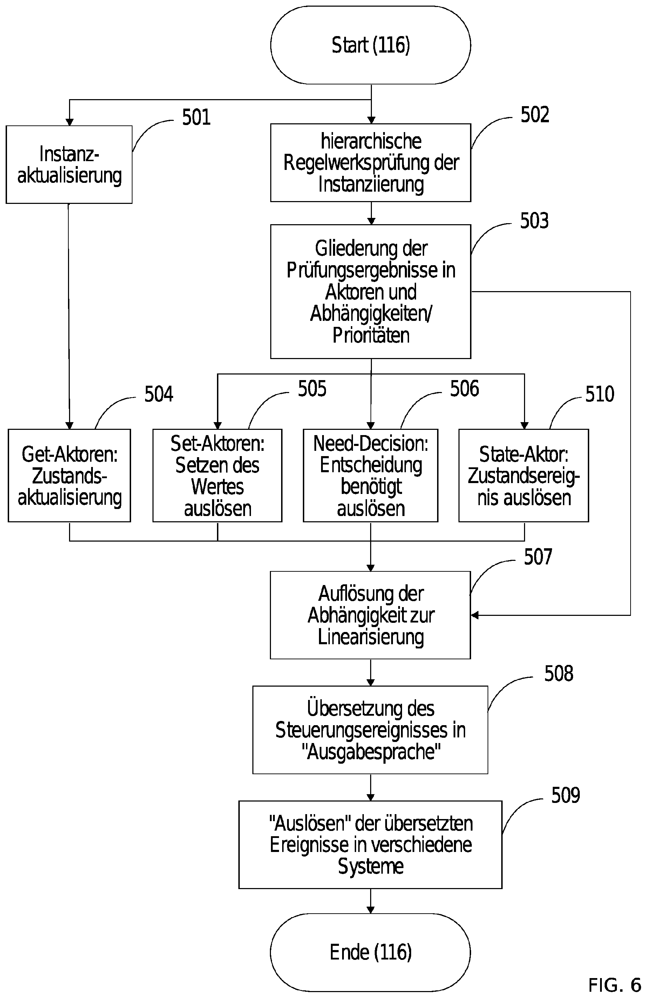

Eine Realisierung von konkreten Instanzen kann die gleichen Verfahren zur Gliederung und Extraktion sowie Zerlegung der symbolischen Bezeichner 405 in einzelne Symbole 406 sowie Instanz- und Bezugsinformation nutzen. Entsprechende Instanzregeln mit zugewiesenen Instanzwerten können unter einem symbolischen Namen in einer Hash-Tabelle verwaltet werden. Zusätzliche Informationen (bspw. der Zeitpunkt der Übertragung des Instanzwertes) können festgehalten werden, da unter Berücksichtigung von Vorschriften zur Linearisierung ggf. eine Zustandsaktualisierung der Instanz ausgelöst werden sollte, vgl. ebenfalls Block 116 in Figur 2 sowie Schritt 501 in Figur 6.

Eine Besonderheit der Datenmodellierung gemäß Figur 5 liegt in der redundanten Form der Verwaltung der semantischen Repräsentation. Auf Basis von Termstrukturen, die direkte Verweise auf die Symbole, (Sub)terme und Intervalle aufweisen, können sich alle Hauptstrukturen über gehashte Listen gegenseitig referenzieren. Außerdem können über der gesamten sich gegenseitig referenzierenden Graph- und/oder Baumstruktur zusätzlich übergeordnete Zugriffsindizes liegen, die direkte Hash-Tabellenzugriffe trotz variabler Versionsintervalle und Termbaumstrukturen erlauben. Somit wird das Wissen in einer Ausführungsform der vorliegenden Erfindung sowohl hierarchisch entlang der Bedeutung der Regeln des Regelwerks 101 verwaltet als auch in direkter linearer datenbank-artiger Form, sodass eine effektive parallele und effiziente Auswertung und Speicherung stattfinden kann.

Der dargestellte Datenaufbau bildet eine effiziente Grundlage für Regelprüfungen, Prüfungen von Instanziierungen und eine Ableitung der daraus resultierenden Steuerungsvorschriften, wie es beispielsweise in Figur 2 dargestellt ist.

Figur 6 zeigt ein schematisches Ablaufdiagramm eines Verfahrens zur Erzeugung von zielsystemabhängigen Steuerungsvorschriften, welches in Ausführungsformen der vorliegenden Erfindung anwendbar ist.

Das in Figur 6 dargestellte Verfahren kann auf dem in Figur 1 oder 2 gezeigten Verfahren beispielhaft aufsetzen, so zum Beispiel in Verfahrensschritt 50 aus Figur 1 oder Verfahrensschritt 116 aus Figur 2. Entsprechend kann auf die Komponenten aus Figur 1 oder 2 Bezug genommen werden, wobei auch dies beispielhaft zu verstehen ist. Figur 6 veranschaulicht, wie zielsystemabhängige Steuerungsvorschriften, bspw. die Steuerungsvorschriften 119 aus Figur 2, gebildet werden können. Das durch die semantischen Repräsentation 110 definierbare Regelwerk 10 oder 101 kann einen deutlich größeren Funktionsumfang besitzen als andere häufig verwendete Beschreibungsmittel von Steueralgorithmen (z.B. Wahrheitstabellen, Logik-Pläne, Relais-Schaltungen). Der Umfang von logischen Aussagen unter Berücksichtigung von Versionen, erweiterten Oder-Mengen und zeitlichen Aussagen kann eine Formulierung von komplexen und gleichzeitig beherrschbaren Regelwerken ermöglichen. Wie in Figur 6 dargestellt, kann aus einem Gesamtregelwerk in Form der semantischen Repräsentation 110 durch Instanziierung ein oder mehrere Zielzustände definiert werden, um letztlich daraus Steuerungsvorschriften abzuleiten.

Eine Basis der Erzeugung von Steuerungsvorschriften kann eine hierarische Regelwerksprüfung der jeweiligen Instanziierung in Schritt 502 bilden, welche eine Erreichung von Zielzuständen berücksichtig. Daraus resultierende Prüfungsergebnisse werden in Schritt 503 gegliedert, wonach Prüfungsergebnisse aufgrund einer auszuführenden Aktion einem der unterschiedlichen Aktoren zugeordnet werden oder bei Abhängigkeitsaussagen einer Linearisierung hinzugefügt werden können. Wenn zur Erreichung des Zielzustands symbolische Identifier genau einen Wert annehmen müssen, so können die Zustände durch Ausführung von Set-Aktoren 505 herbeigeführt werden. Können Wahloptionen aus erweiterten Oder-Bedingungen nicht vollständig zur Zielerreichung aufgelöst werden, benötigt eine Ausführungsform der vorliegenden Erfindung weitere Entscheidungen, bevor der Zielzustand erreicht werden kann. In diesem Fall handelt es sich um NeedDecision-Aktoren 506. Desweiteren können zeitliche Abhängigkeiten des Regelwerks und systemspezifische Vorschriften der Linearisierung zur Bildung von seriellen und/oder parallelen Aktor-Abfolgen berücksichtigt werden. Dies kann gemäß den Vorschriften zur Linearisierung 115 aus Figur 2 erfolgen. Wird ein Zustand explizit oder durch eine semantische Notwendigkeit erreicht, so kann ein State-Aktor 510 die entsprechenden Steuerungsvorschriften erzeugen.

Sofern ein Systemerfordernis eine Instanzaktualisierung 501 erzeugen muss, können für alle abfragbaren Zustände Get-Aktoren 504 erzeugt werden, um Systemzustände neu in den Zielsystemen bestimmen zu lassen und als instanzenabhängige Rückinformation des Zielsystems neu in die Instanzzustände einfließen zu lassen, um die weiteren Schritte und entsprechende Steuerungsvorschriften zur Erreichung des Zielzustands zu aktualisieren.

Abschließend können die erzeugten Aktor-Befehle 504, 505, 506, 510 gemäß den Linearisierungsvorschriften in Schritt 507 in eine eindeutige Reihenfolge gebracht werden. Dies kann einer Befehlskette für ein gesteuertes System entsprechen. Die gebildete Reihenfolge der Aktor-Befehle 504, 505, 506, 510 für Symbolebenen kann in Schritt 508 in zielsystemspezifischen Anweisungen umgewandelt werden, welche als Definition einer Ausgabesprache verstanden werden kann, vgl. Block 117 in Figur 2, an den Symbolen für die Auslösung der Aktoren hinterlegt sein können. In Schritt 509 kann eine Steuerung mithilfe der entsprechenden gewandelten Aktor-Befehle in den Zielsystemen erfolgen.

Figur 7 ist eine schematische Darstellung einer rekursiven semantischen Baumanalyse, welche in Ausführungsformen der vorliegenden Erfindung angewendet wird. Figur 7 stellt dar, wie eine Ausführungsform der vorliegenden Erfindung die Analyse vornehmen kann, um Inkonsistenzen, Widersprüche und potentielle Optimierungen in einem Regelwerk, beispielsweise dem Regelwerk 101 aus Figur 2 zu finden. Die gleiche Ablaufstruktur kann darüber hinaus verwendet werden, um Berechnungen, die durch das Regelwerk definiert wurden, auszuführen. Dabei können gleichzeitig die bereits implizit getroffenen Entscheidungen zu Regeln extrahiert werden bzw. die offenen Wahloptionen für eine zukünftige Ausprägung einer konkreten Instanz abgeleitet werden.

Das in Figur 7 dargestellte Verfahren kann auf dem in Figur 2 gezeigten Verfahren beispielhaft aufsetzen, so zum Beispiel in Verfahrensschritt 118. Dies ist jedoch keinesfalls zwingend. Figur 7 kann beispielhaft auf Komponenten aus Figur 2 Bezug nehmen.

Eine Ausführungsform der vorliegenden Erfindung wertet die semantische Repräsentation in mehreren aufeinander aufbauenden Phasen aus und betrachtet insbesondere semantische Bäume, welche in der semantischen Repräsentation abgebildet sind, bspw. den semantischen Baum 111 aus Figur 2. Die Auswertung folgt dabei dem gleichen Schema der semantischen rekursiven Baumanalyse 118, die in der Literatur auch Backtracking genannt wird. Der generelle Ablauf zur Erkennung von Fehlern erster Ordnung 601, zweiter Ordnung 607 sowie die Berechnung von Ergebnissen 615 kann somit identisch sein. Funktionen, die in allen Bereichen gleichermaßen angewendet werden, sind in der Figur 7 daher über die gesamte Breite des Diagramms gezeichnet, bspw. Schritte 605 und 606. In manchen Ablaufschritten, bspw. 603, können diese Grundfunktionalitäten durch spezifische Zusatzprüfungen oder Abläufe ergänzt bzw. ersetzt werden, bspw. in Schritt 610.

Eine semantische Repräsentation, beispielsweise die semantische Repräsentation 110 aus Figur 2, kann Fehler verschiedener Ordnungen aufweisen, die ausschließlich wegen ihrer Gleichartigkeit in der Bearbeitung zu zwei Klassen zusammengefasst sein können. Fehler können überhaupt nur vorkommen, da logische Ausdrücke zwar der Grammatik (Syntax und Satzzeichen) genügen können, aber ansonsten bedeutungslos oder widersprüchlich sein können.

Die Erkennung der Fehler erster Ordnung 601 kann einen oder mehrere der folgenden Fälle, in beliebiger Reihenfolge und Kombination, aufweisen:
- Selbstbezüge von symbolischen Aussagen oder mathematischen Termen. In der Bedeutung von Termen ist es verboten, eine Aussage durch sich selbst zu erfordern bzw. zu belegen. Einfacher gesagt, dürfen Symbole nicht unter der Verwendung von sich selbst definiert sein. Durch derartige zyklische Bezüge in beliebigen Teilaussagen werden Aussagen nicht beweisbar bzw. können nicht abgeleitet werden. Die Definition von rekursiven Formeln ist dagegen erlaubt, da die Neudefinition einer Variablen einer Folge-Generation sich auf die bekannte Generation stützt (Schritt nach n+1 basiert auf n).
- Gleiche Symbole an verschiedenen Stellen müssen sich auf gleiche Einheiten beziehen. Die Zuweisung einer Schulnote im Zahlenbereich 1 bis 6 kann nicht ohne "Übersetzung" mit der verbalen Form "sehr gut" bis "ungenügend" in Bezug gesetzt werden.
- Symbole müssen innerhalb des ggf. definierten Wertebereichs liegen. Im Fall der Schulnoten werden z.B. in der Grundschule oftmals ganze Zahlen im Bereich 1 bis 6 verwendet, wohingegen in der Oberstufe die Punktzahl 0 bis 15 zur Anwendung kommt. Eine Zuweisung einer Note als Rechengrundlage eines Notendurchschnitts muss somit im korrekten (also vereinbarten) Wertebereich liegen.

Erfindungsgemäß stellt die Analyse dieser Fehlerarten die Fehlerhaftigkeit eines Terms direkt (ohne weitere Analyse des übrigen Regelwerks) anhand der gespeicherten Daten fest. Sie wird daher als "Fehler erster Ordnung" bezeichnet.

Für die vollständige Untersuchung des Regelwerks auf diese Fehler können alle echten Wurzelterme in 601 einer rekursiv gestalteten Teil-Analyse unterzogen. Echte Wurzeln sind diejenigen Regelaussagen, die ein Symbol definieren, das in keinem anderen Term als Symbol zur Definition anderer Terme Verwendung findet. Die Erkennung von Schleifen in einer rekursiven Abarbeitung kann zunächst einen Vergleich des aktuell untersuchten Terms mit allen von der Wurzel aus bereits betrachteten Termen erfordern 602. Die folgenden Schritte können anhand des im Term verwendeten Versionsintervalls reduziert werden 603. Sofern keine explizite Version verwendet wird, kann die generelle Version (-∞ bis +∞ → entspricht immer) als Grundannahme gelten. Versionen können in ihrer Wirkung durch Intervallangaben geschachtelt werden und schränken diese generelle Grundannahme immer weiter ein. Im Extremfall ist die Einschränkung auf einen konkreten Versionsnamen als Intervall eines Wertes die speziellste Form einer Version.

Eine Auswahl der relevanten Symbole 604 löst die in der semantischen Repräsentation vorgesehene Gruppenbildung auf. Logischen Aussagen (Und, Oder und zeitliche Relation) beziehen sich nicht auf ein definierte Gruppensymbol, sondern auf alle Mitglieder der Gruppe gleichermaßen. Eine Oder-Auswahl der Gruppe A von Symbolen B, C, D soll eben äquivalent zur Auswahl aus B, C, D sein und nicht die Gruppe A als Symbol umfassen. Letzteres würde einer Und-Verbindung der genannten Symbole unter dem Namen A entsprechend, die eine Gruppe gerade nicht vornimmt. Da Gruppen (und auch dynamische Gruppen) wieder unmittelbar Gruppen aufweisen können, ist die Ermittlung von relevanten Symbolen rekursiv auszuführen.

Eine Rekursion von der Wurzel zu den Blättern im semantischen Baum ist dann auszuführen, wenn Sub-Terme vorhanden sind oder Regeln die genutzten Symbole weiter spezifizieren. Um nach den Rekursionen eine Auswertung strukturiert vornehmen zu können, werden zunächst die Rekursionsoptionen ermittelt 605. Entsprechende Rekursionen können gemäß einer Versionierung von Regeln ggf. mehrfach für verschiedene Versionsintervalle vorgesehen sein und ausgeführt werden 606. Im Fall der Fehler erster Ordnung werden die ermittelten Fehler strukturiert zusammengetragen, aber keine weitere Berechnung anhand der Terme ausgeführt. Dies ändert sich in den anderen Ausführungen der rekursiven semantischen Baumanalyse 118.

Die Erkennung von Fehlern zweiter Ordnung 607 kann einen oder mehrere der folgenden Fälle, in beliebiger Reihenfolge und Kombination, analysieren:
- Logische Widersprüche zwischen geforderten Und-Bedingungen und ausschließlichen Oder-Bedingungen. Beispielsweise widerspricht die notwendige Wahl von genau nur einer Option von A oder B der Forderung von einem gleichzeitigen Erfülltsein von A und B. Dieser Fehlertypus hat viele Spielarten, da die Oder-Mengen in einer Ausführungsform der vorliegenden Erfindung durch "n bis m aus k Optionen" definierbar sind.
- Äquivalent zum Und/Oder Konflikt bestehen potentielle Widersprüche in mathematischen Termen bei gegenteiligen Größer-Kleiner Relationen oder anderen Gleich- / Ungleich-Konstellationen.
- Gleichermaßen sind durch zeitliche Abfolgen derartige Widersprüche denkbar, die aber auf logische Ebene identisch zu Fehlern erster Ordnung sind, da die beteiligten Symbole bereits hier zum Zirkelschluss führen.

Erfindungsgemäß ermittelt die Analyse dieses Fehlertyps den Fehler erst in einer logischen Auswertung 608 der tatsächlichen Terme durch Kombinatorik bzw. symbolische Umformung. Eine Ausführungsform der vorliegenden Erfindung realisiert die Prüfung auf Basis der Kombinatorik kritischer Symbole, die in einem Versionsintervall mehrfach - also in verschiedenen Termen - an der Definition von Aussagen beteiligt sind. Für alle identifizierten potentiellen Quellen von logischen Fehlern, werden Lösungshypothesen generiert 616 und ebenfalls rekursiv für entsprechende Teilbäume getestet 609. Eine Einschränkung der Kombinatorik auf die notwendigen Fälle von Teilversionen 610 und Teilmengen von kritischen Symbolen 611 stellt einen Vorteil gegenüber den ansonsten theoretischen brute-force Methoden dar, in der das Regelwerk für alle mathematisch konstruierbaren Kombinationen der Symbole und deren Werte zu testen ist.

Die mathematische Erfüllbarkeit der Teilterme 612 kann so ausgeführt werden, dass Terme ohne Annahme über den Zustand der "unkritischen" Symbole bewertet werden. Wenn ein Zustand einer getesteten Hypothese nicht erfüllbar ist, obwohl keine Annahme zu den übrigen Symbolen getroffen wird, gilt der entsprechende Sub-Term als unmöglich. Bei der summativen Zusammenführung der bestehenden Lösungsoptionen 613 können unmögliche und mögliche Optionen gemäß den logischen Regeln verrechnet und über den semantischen Baum bis zur Wurzel (bzw. Teilauswertung) aggregiert werden.

Die rekursive Auswertung des semantischen Baums für Instanzen in Schritt 614 nutzt die gleichen Ablaufstrukturen, kann aber statt der reinen Erfüllbarkeit von Aussagen die Werte der Sub-Terme anhand der mathematischen Formeln und instanziierten Werte berechnen 615. Sub-Terme, die in der Berechnungsrekursion einen konkreten Wert einer Instanz auf Basis der Regeln notwendigerweise zugeordnet bekommen, werden in eine Liste der notwendigen Folgen für diese Instanz aufgenommen, um daraus entsprechende Steuerungsvorschriften und entsprechende Befehle abzuleiten, vgl. ebenfalls Schritt 502 in Figur 6. Offene Wahloptionen für eine zukünftige Ausprägung einer konkreten Instanz verbleiben als Einschränkung der in den Regeln ursprünglich definierten Optionen und erlauben damit eine effektivere weitere Bearbeitung der Instanz (Reduktion der Kombinatorik) und entsprechende Kommunikation der verbleibenden Entscheidungsoptionen an den Nutzer oder ein anderes System, vgl. hierzu Schritt 506 in Figur 6.

In einer oder mehreren bevorzugten Ausführungsformen der vorliegenden Erfindung können die folgenden Aspekte und/oder Vorteile besonders relevant sein:
Eine Ausführungsform kann eine Umsetzung einer logik-basierten Steuerung anderer Anlagen und Systeme (inkl. anderer Computersysteme) mit verschränkten Versionen betreffen, welche eine Definition von Zielzuständen und voller Transparenz zwischen erzeugter Systemlogik und der Quellinformation aller logischen Aussagen und Instanzwerten ermöglichen.

Eine Anzahl von Basis-Terme aus Und- und/oder Oder-Aussagen kann durch das Konzept der n aus m der k-Optionen eines flexiblen Oder-Operators stark reduziert und damit der Regelung zugänglich gemacht werden. Eine Aussage aus einer Zeile kann in einer Basislogik potentiell tausende Aussagen erfordern, die als Kombinatorik praktisch nicht verarbeitet werden können. So kann durch das Konzept der n aus m der k-Optionen eines flexiblen Oder-Operators eine Steuerung dadurch zugänglich gemacht werden, dass lediglich diejenigen Symbole der semantischen Repräsentationen zur konkreten Prüfung einer Regelung verwendet werden, die abhängig von der aktuell betrachteten logischen Regeln sind und alle anderen Symbole lediglich mengenmäßig betrachtet werden.

Ferner kann eine Kombination aller Sprachelemente in eine konsistente Steuerungslogik a) ohne Ausführung von Fehlerzuständen ermittelt, b) für beliebige Instanz-Hypothesen verbleibende Wahloptionen ermittelt, und/oder c) effektiv den technisch nicht bearbeitbaren (Speicherplatz) oder erzeugbaren (zeitliche Länge) vollen Kombinationsbaum auf relevante Teilaussagen reduziert werden.

Die Verwendung von dialektischer Sprachflexibilität kann sowohl auf der Ebene der Satzzeichen, der Syntax von Regeln als auch in der Ausgabe von Steuerungsvorschriften und entsprechenden -befehlen erfolgen, was einen natürlich wirkenden Text als Regelwerk durch Mensch und Maschine gleichermaßen und eindeutig zu verstehen erlaubt.

Ferner kann eine Umsetzung einer logik-basierten Steuerung anderer Anlagen und Systeme (inkl. anderer Computersysteme) mit verschränkten Versionen, der Möglichkeit der Definition von Zielzuständen und voller Transparenz zwischen erzeugter Systemlogik und der Quellinformation aller logischen Aussagen und Instanzwerte vorgesehen sein.

Eine Umsetzung kann vorzugsweise alle Sprachelemente in einer konsistenten technisch nutzbaren Steuerungslogik verwenden, um damit a) logische Fehlerzustände zu ermittelt, bevor ein Regelwerk zur Steuerung von Anlagen oder Systemen eingesetzt wird, b) für beliebige Instanz-Hypothesen, welche einer konkreten Zusammenstellung ausgewählter Zustände der im Regelwerk relevanten Anlagen und Systeme entsprechen können, die verbleibenden Wahloptionen zu ermitteln, und/oder c) einen technisch bearbeitbaren und auf die relevanten Teilaussagen reduzierten Kombinationsbaum erzeugen zu können und eine zeitbasierte Systemsteuerung zu ermöglichen.

Vorzugsweise kann eine Umsetzung Anwendern die Erstellung eines logischen Regelwerks ermöglichen, ohne eine konkrete Umsetzung in einer prozeduralen, objektorientierten oder logischen Programmiersprache durchführen zu müssen, da die Verwendung der Dialekte sowohl auf der Ebene der Satzzeichen und der Syntax von Regeln einen natürlich wirkenden Text ermöglicht.

Es sollte verständlich sein, dass die vorliegende Erfindung nicht auf eine konkrete Ausgestaltung der in den Figuren 1 bis 7 gezeigten Verfahren, Vorrichtungen und Systeme beschränkt ist. Beispielsweise können andere Schemata für textuelle Regelwerke und andere Steuerungsvorschriften oder Befehle verwendet werden. Ferner können die Regelwerke gemäß Abwandlungen der dargestellten Umsetzungsverfahren in die jeweiligen Steuerungsvorschriften transformiert werden. Die vorliegende Erfindung ist nicht auf eine bestimmte dargestellte Syntax oder Semantik der Regelwerke, der semantischen Repräsentation oder der zielsystemabhängigen Steuerungsvorschriften beschränkt. Darüber hinaus können die in der vorstehenden Beschreibung, den Ansprüchen und den Figuren offenbarten Merkmale sowohl einzeln als auch in beliebiger Kombination für die Verwirklichung der Erfindung in ihren verschiedenen Ausführungsformen von Bedeutung sein.

## Patentansprüche

1. Computerimplementiertes Verfahren zur Erzeugung von Steuerungsvorschriften, das folgende Schritte umfasst:
Bereitstellen (10) eines Dokuments, das mindestens eine Angabe aufweist, die ein Regelwerk formuliert;
Gliedern (20) der mindestens einen Angabe, um eine Vielzahl von syntaktischen Blöcken zu generieren;
Konstruieren (30) von Termen und Symbolen aus den syntaktischen Blöcken, um eine semantische Repräsentation zu generieren, wobei die semantische Repräsentation mindestens einen semantischen Baum mit einer Vielzahl von Termen und Symbolen aufweist, welche sowohl die Semantik des Regelwerks als auch seine logischen Zusammenhänge eindeutig darstellen;
Prüfen (40) der semantischen Repräsentation, wobei das Prüfen (40) der semantischen Repräsentation ein automatisches Prüfen des Regelwerkes auf Vollständigkeit aufweist, und ein automatisches Prüfen des Regelwerks auf Konsistenz und
Anwendung auf einen Einzelfall, durch eine rekursive semantische Baumanalyse des mindestens einen semantischen Baumes, um Fehler erster Ordnung (601) und Fehler zweiter Ordnung (607) in der semantischen Repräsentation zu erkennen, wobei ein Fehler erster Ordnung ohne weitere Analyse des übrigen Regelwerks anhand der gespeicherten Daten festgestellt wird und ein Fehler zweiter Ordnung durch Kombinatorik bzw. symbolische Umformung der Terme und deren logischen Auswertung ermittelt wird;
Erzeugen (50) von mindestens einer Steuerungsvorschrift auf der Grundlage der geprüften semantischen Repräsentation, wobei die mindestens eine Steuerungsvorschrift dem durch die mindestens eine Angabe formulierten Regelwerk entspricht; und
Umwandeln (60) der mindestens einen Steuerungsvorschrift in eine Vielzahl von plattformspezifischen Befehlen zur Ansteuerung einer Zielplattform.

2. Computerimplementiertes Verfahren nach Anspruch 1, wobei die mindestens eine Angabe eine textuelle Formulierung des Regelwerkes aufweist.

3. Computerimplementiertes Verfahren nach Anspruch 1 oder 2, wobei die mindestens eine Steuerungsvorschrift eine zielsystemabhängige Steuerungsvorschrift ist.

4. Computerimplementiertes Verfahren nach Anspruch 1, wobei die Vielzahl von plattformspezifischen Befehlen eine Vielzahl von Aktoren aufweist, welche die Zielplattform in einen Zielzustand versetzen.

5. Computerimplementiertes Verfahren nach Anspruch 4, wobei die Vielzahl von Aktoren einen oder mehrere aus einem Aktor zum Setzen mindestens eines Parameters der Zielplattform, einem Aktor zum Auslesen von mindestens einem Parameter eines aktuellen Systemzustandes der Zielplattform und einem Aktor zum Abfragen einer Wahlmöglichkeit für mindestens einen Parameter der Zielplattform aufweist.

6. Computerimplementiertes Verfahren nach einem der vorhergehenden Ansprüche, wobei das Umwandeln (60) ein Einreihen der Vielzahl von plattformspezifischen Befehlen gemäß mindestens einer Linearisierungsvorschrift aufweist.

7. Computerimplementiertes Verfahren nach einem der vorhergehenden Ansprüche, wobei der mindestens eine semantische Baum eine Vielzahl von Elementen aufweist, wobei ein oder mehrere aus der Vielzahl von Elementen mindestens eine Referenz auf ein weiteres Element aus der Vielzahl von Elementen aufweisen, wobei die mindestens eine Referenz durch gehashte Listen und Zugriffsindizes implementiert ist.

8. Computerimplementiertes Verfahren nach einem der vorhergehenden Ansprüche, wobei die rekursive semantische Baumanalyse mit Termen startet, welche Wurzeln des mindestens einen semantischen Baumes darstellen.

9. Computerimplementiertes Verfahren nach einem der vorhergehenden Ansprüche, wobei die semantische Repräsentation mindestens eine Instanziierung aufweist, wobei die mindestens eine Instanziierung einen oder mehrere Werte für Symbole der semantischen Repräsentation aufweist.

10. Computerimplementiertes Verfahren nach einem der vorhergehenden Ansprüche, das ferner ein Transferieren der semantischen Repräsentation in einen Formaltext entsprechend der mindestens einen Angabe im Dokument umfasst.

11. Vorrichtung zur Erzeugung von Steuerungsvorschriften, wobei die Vorrichtung eingerichtet ist, ein Verfahren nach einem der vorhergehenden Ansprüche auszuführen.

12. System, das Folgendes umfasst:
eine steuer- und/oder regelbare Plattform, welche mittels mindestens einer Steuerungsvorschrift in einen Systemzustand versetzt werden kann;
mindestens ein Speichermedium, das mindestens eine Angabe speichert, die ein Regelwerk für die Plattform formuliert; und
mindestens eine Vorrichtung nach Anspruch 11.

## Claims

1. A computer-implemented method for generating control commands, comprising the steps of:
providing (10) a document that includes at least one declaration that formulates a rule set;
parsing (20) the at least one declaration to generate a plurality of syntactical blocks;
constructing (30) terms and symbols from the syntactical blocks, to generate a semantic representation, the semantic representation including at least one semantic tree, the semantic tree including a plurality of terms and symbols that unambiguously represent both the semantics of the rule set and its logical connections;
validating (40) the semantic representation, wherein validating (40) the semantic representation includes automatically validating the rule set in terms of completeness, and automatically validating the rule set in terms of consistency and application to an individual case, by a recursive semantic tree analysis of the at least one semantic tree, to detect first order errors (601) and second order errors (607) in the semantic representation, wherein a first order error is determined from the stored data without further analysis of the remaining rule set, and a second order error is determined by combinatorics or symbolic reshaping of the terms and their logical evaluation;
generating (50) at least one control command based on the validated semantic representation, wherein the at least one control command corresponding to the rule set formulated by the at least one declaration; and
converting (60) the at least one control command into a plurality of platform-specific instructions for driving a target platform.

2. The computer-implemented method of claim 1, wherein the at least one declaration includes a textual formulation of the rule set.

3. The computer-implemented method of claim 1 or 2, wherein the at least one control command is a target-system-dependent control command.

4. The computer-implemented method of claim 1, wherein the plurality of platform-specific instructions include a plurality of actors that translate the target platform in a target state.

5. The computer-implemented method of claim 4, wherein the plurality of actors include one or more of an actor for setting at least one parameter of the target platform, an actor for reading out at least one parameter of a current system state of the target platform, and an actor for querying an option for at least one parameter of the target platform.

6. The computer-implemented method of any one of the preceding claims, wherein the converting (60) includes sequencing of the plurality of platform-specific instructions according to at least one linearization command.

7. The computer-implemented method of any one of the preceding claims, wherein the at least one semantic tree includes a plurality of elements, wherein one or more of the plurality of elements includes at least one reference to a further element from the plurality of elements, wherein the at least one reference is implemented by hashed lists and access indices.

8. The computer-implemented method of any one of the preceding claims, wherein the recursive semantic tree analysis starts with terms that constitute the roots of the at least one semantic tree.

9. The computer-implemented method of any one of the preceding claims, wherein the semantic representation includes at least one instantiation, wherein the at least one instantiation includes one or more values for symbols of the semantic representation.

10. The computer-implemented method of any one of the preceding claims, further comprising transferring the semantic representation into a formal text corresponding to the at least one declaration in the document.

11. A device for generating control commands, the device being configured to perform a method according to any one of the preceding claims.

12. A system, comprising:
an open- and/or closed-loop platform that can be translated into a system state by at least one control command;
at least one storage medium that stores at least one declaration that formulates a rule set for the platform; and
at least one device according to claim 11.

## Revendications

1. Procédé mis en œuvre par ordinateur pour générer des règles de commande, comprenant les étapes consistant à :
fournir (10) un document ayant au moins une indication qui formule un ensemble de règles ;
décomposer (20) l'au moins une indication pour générer une pluralité de blocs syntaxiques ;
construire (30) des termes et des symboles à partir des blocs syntaxiques pour générer une représentation sémantique, la représentation sémantique ayant au moins un arbre sémantique avec une pluralité de termes et de symboles qui représentent clairement à la fois la sémantique de l'ensemble de règles et ses relations logiques ;
vérifier (40) la représentation sémantique, dans lequel la vérification (40) de la représentation sémantique comprend une vérification automatique de l'ensemble de règles pour l'exhaustivité, et une vérification automatique de l'ensemble de règles pour la cohérence et l'application à un cas particulier, par le biais d'une analyse d'arbre sémantique récursive de l'au moins un arbre sémantique, pour détecter des erreurs de premier ordre (601) et des erreurs de second ordre (607) dans la représentation sémantique, dans lequel une erreur de premier ordre est déterminée à l'aide des données stockées sans analyse supplémentaire du reste de l'ensemble de règles et une erreur de second ordre est déterminée par combinaison ou transformation symbolique des termes et leur évaluation logique ;
générer (50) au moins une règle de commande sur la base de la représentation sémantique vérifiée, dans lequel l'au moins une règle de commande correspond à l'ensemble de règles formulé par l'au moins une indication ; et
convertir (60) l'au moins une règle de commande en une pluralité d'instructions spécifiques à la plate-forme pour commander une plate-forme cible.

2. Procédé mis en œuvre par ordinateur selon la revendication 1, dans lequel l'au moins une indication comprend une formulation textuelle de l'ensemble de règles.

3. Procédé mis en œuvre par ordinateur selon la revendication 1 ou 2, dans lequel l'au moins une règle de commande est une règle de commande dépendante du système cible.

4. Procédé mis en œuvre par ordinateur selon la revendication 1, dans lequel la pluralité d'instructions spécifiques à la plate-forme comprend une pluralité d'actionneurs qui placent la plate-forme cible dans un état cible.

5. Procédé mis en œuvre par ordinateur selon la revendication 4, dans lequel la pluralité d'actionneurs comprend un ou plusieurs actionneurs parmi les actionneurs suivants :
un actionneur pour régler au moins un paramètre de la plate-forme cible, un actionneur pour lire au moins un paramètre d'un état de système actuel de la plate-forme cible et
un actionneur pour demander une option pour au moins un paramètre de la plate-forme cible.

6. Procédé mis en œuvre par ordinateur selon l'une quelconque des revendications précédentes, dans lequel la conversion (60) comprend la mise en file d'attente de la pluralité d'instructions spécifiques à la plate-forme selon au moins une règle de linéarisation.

7. Procédé mis en œuvre par ordinateur selon l'une quelconque des revendications précédentes, dans lequel l'au moins un arbre sémantique comprend une pluralité d'éléments, un ou plusieurs éléments de la pluralité d'éléments comprenant au moins une référence à un autre élément de la pluralité d'éléments, l'au moins une référence étant mise en œuvre par des listes hachées et des index d'accès.

8. Procédé mis en œuvre par ordinateur selon l'une quelconque des revendications précédentes, dans lequel l'analyse d'arbre sémantique récursive commence avec des termes qui représentent des racines de l'au moins un arbre sémantique.

9. Procédé mis en œuvre par ordinateur selon l'une quelconque des revendications précédentes, dans lequel la représentation sémantique comprend au moins une instanciation, l'au moins une instanciation comprenant une ou plusieurs valeurs pour des symboles de la représentation sémantique.

10. Procédé mis en œuvre par ordinateur selon l'une quelconque des revendications précédentes, comprenant en outre le transfert de la représentation sémantique dans un texte formel correspondant à l'au moins une indication dans le document.

11. Dispositif pour générer des règles de commande, le dispositif étant configuré pour exécuter un procédé selon l'une quelconque des revendications précédentes.

12. Système, comprenant :
une plate-forme pouvant être commandée et/ou régulée qui peut être placée dans un état de système au moyen d'au moins une règle de commande ;
au moins un support de stockage stockant au moins une indication qui formule un ensemble de règles pour la plate-forme ; et
au moins un dispositif selon la revendication 11.
